(19) Europäisches Patentamt
European Patent Office
Office européen des brevets

(11) **EP 4 567 632 A1**

(12) **EUROPEAN PATENT APPLICATION**
published in accordance with Art. 153(4) EPC

(43) Date of publication:
**11.06.2025 Bulletin 2025/24**

(51) International Patent Classification (IPC):
*G06F 16/9535* (2019.01)

(21) Application number: **23856573.3**

(86) International application number:
**PCT/CN2023/114023**

(22) Date of filing: **21.08.2023**

(87) International publication number:
**WO 2024/041483 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.08.2022 CN 202211032748**

(71) Applicant: **Huawei Technologies Co., Ltd.
Shenzhen, Guangdong 518129 (CN)**

(72) Inventors:
• **CHEN, Bo**
  **Shenzhen, Guangdong 518129 (CN)**
• **LI, Xiangyang**
  **Shenzhen, Guangdong 518129 (CN)**
• **GUO, Huifeng**
  **Shenzhen, Guangdong 518129 (CN)**
• **TANG, Ruiming**
  **Shenzhen, Guangdong 518129 (CN)**
• **DONG, Zhenhua**
  **Shenzhen, Guangdong 518129 (CN)**

(74) Representative: **Gill Jennings & Every LLP
The Broadgate Tower
20 Primrose Street
London EC2A 2ES (GB)**

(54) **RECOMMENDATION METHOD AND RELATED DEVICE**

(57) A recommendation method, applied to the field of artificial intelligence, includes: obtaining a first feature representation and a second feature representation, where the first feature representation corresponds to attribute information of a target user, the second feature representation corresponds to attribute information of a target item, the first feature representation includes a plurality of first feature sub-representations, and the second feature representation includes a plurality of second feature sub-representations; determining a plurality of similarities based on the plurality of first feature sub-representations and the plurality of second feature sub-representations, where each similarity is a similarity between one of the first feature sub-representations and one of the second feature sub-representations; and fusing the plurality of similarities to obtain recommendation information between the target user and the target. In this application, interaction information between a user and an item is explicitly modeled, no additional parameter needs to be added in an interaction phase, and better prediction effect can be achieved.

[FIG. 5]

Obtain a first feature representation and a second feature representation, where the first feature representation corresponds to attribute information of a target user, the second feature representation corresponds to attribute information of a target item, the first feature representation includes a plurality of first feature sub-representations, and the second feature representation includes a plurality of second feature sub-representations — 501

Determine a plurality of similarities based on the plurality of first feature sub-representations and the plurality of second feature sub-representations, where each similarity is a similarity between one of the first feature sub-representations and one of the second feature sub-representations — 502

Fuse the plurality of similarities to obtain recommendation information between the target user and the target — 503

When the recommendation information meets a preset condition, determine to recommend the target item to the target user — 504

**Description**

This application claims priority to Chinese Patent Application No. 202211032748.0, filed with the China National Intellectual Property Administration on August 26, 2022 and entitled "RECOMMENDATION METHOD AND RELATED APPARATUS", which is incorporated herein by reference in its entirety.

TECHNICAL FIELD

This application relates to the field of artificial intelligence, and in particular, to a recommendation method and a related apparatus.

BACKGROUND

Artificial intelligence (artificial intelligence, AI) is a theory, a method, a technology, and an application system in which human intelligence is simulated and extended by using a digital computer or a machine controlled by a digital computer, to perceive an environment, obtain knowledge, and achieve an optimal result by using the knowledge. In other words, the artificial intelligence is a branch of computer science and is intended to understand essence of intelligence and produce a new intelligent machine that can react in a manner similar to human intelligence. The artificial intelligence is to research design principles and implementation methods of various intelligent machines, so that the machines have perception, inference, and decision-making functions.

Selectivity prediction means predicting a probability that a user selects an item in a specific environment. For example, in a recommendation system of an application, for example, an app store or online advertising, the selectivity prediction plays a key role. The selectivity prediction can maximize benefits of an enterprise and improve user satisfaction. The recommendation system needs to consider both a selectivity of an item to a user and an item price. The selectivity is predicted by the recommendation system based on historical behavior of the user, and the item price represents benefits of the system that are obtained after the item is selected/downloaded. For example, a function may be constructed, the function may be used to calculate function values based on predicted user selectivities and item prices, and the recommendation system arranges items in descending order of the function values.

A common two-tower model is a popular model currently used in a pre-ranking stage in the industry, and usually includes two parts: a user tower and an item tower. In a training stage of the model, the user tower and the item tower respectively model user information and item information, and then score the information. In an online deployment stage of the model, the modeled item information is usually pre-stored on a server. For each user request, only the user information needs to be modeled, the modeled user information and the pre-stored item information are used for calculating scores, and then ranking is performed based on the scores.

However, the existing common two-tower model separately models the user and the item, and lacks interaction information between the user and the item. The common two-tower model performs interaction scoring on the user information and the item information only when calculating the scores for ranking. This is a delayed interaction strategy. Due to the lack of the interaction information between the user and the item, this strategy reduces accuracy of the model.

SUMMARY

This application provides a recommendation method, to achieve better prediction effect.

According to a first aspect, this application provides a recommendation method. The method includes: obtaining a first feature representation and a second feature representation, where the first feature representation corresponds to attribute information of a target user, the second feature representation corresponds to attribute information of a target item, the first feature representation includes a plurality of first feature sub-representations, and the second feature representation includes a plurality of second feature sub-representations; determining a plurality of similarities based on the plurality of first feature sub-representations and the plurality of second feature sub-representations, where each similarity is a similarity between one of the first feature sub-representations and one of the second feature sub-representations; fusing the plurality of similarities to obtain recommendation information between the target user and the target; and when the recommendation information meets a preset condition, determining to recommend the target item to the target user.

In this embodiment of this application, interaction information between the user and the item is modeled based on a similarity between slices of the feature representations of the user and the item, that is, the interaction information between the user and the item is explicitly modeled, no additional parameter needs to be added in an interaction stage, and better prediction effect can be achieved.

In a possible implementation, the plurality of first feature sub-representations are obtained by segmenting the first feature representation, and the plurality of second feature sub-representations are obtained by segmenting the second feature representation.

In a possible implementation, in an interaction stage, obtained user and item representations are sliced, similarities between all slices are calculated and maximum values are obtained, and then multi-level aggregation is performed on user-item interaction scores at all levels, to obtain a final interaction score.

In a possible implementation, the plurality of similarities may include a plurality of groups of similarities, and similarities in each group may be: similarities between one of the first feature sub-representations and the second feature sub-representations; or similarities between one of the second feature sub-representations and the first feature sub-representations. When the plurality of similarities are fused, maximum values of the plurality of similarities included in all the groups of similarities may be fused to obtain the recommendation information between the target user and the target.

In a possible implementation, for each first feature sub-representation, a similarity between the first feature sub-representation and each second feature sub-representation may be calculated to obtain one group of similarities, and a maximum value may be obtained for a plurality of similarities in one group of similarities. Similarly, one group of similarities may be obtained for each first feature sub-representation, a maximum value may be obtained for a plurality of similarities in one group of similarities, to obtain a plurality of maximum values, and maximum values of the plurality of similarities may be fused.

In an implementation, a fusion manner may be an addition operation (optionally, an addition result may be further normalized to a value between 0 and 1), and the recommendation information indicates a probability that the target user selects the target item.

In a possible implementation, after a first target embedding representation corresponding to the attribute information of the target user is obtained, the first target embedding representation corresponding to the attribute information of the target user may be processed by a first encoder to obtain the first feature representation, that is, the first feature representation is obtained by processing, by the first encoder, the first target embedding representation corresponding to the attribute information of the target user.

In a possible implementation, the first encoder includes a plurality of first fully-connected layers, the first feature representation is obtained based on outputs of M first fully-connected layers in the plurality of first fully-connected layers, and M is a positive number greater than 1.

After the feature representation corresponding to the user is obtained, interaction information at different levels may be modeled based on a plurality of layers of user representations output by the first encoder on a user side in the two-tower model. In the conventional technology, modeling is performed based on only a feature representation output by a last layer of the user-side encoder in the two-tower model, which is a coarse-grained modeling manner. In this application, modeling is performed based on a plurality of layers of user representations, so that subsequent prediction effect can be improved.

In a possible implementation, the second feature representation is obtained by a second encoder based on the attribute information of the target item, the second encoder includes a plurality of second fully-connected layers, and the second feature representation is obtained based on an output of a second fully-connected layer that is in the plurality of second fully-connected layers and that is closest to an output layer.

In a possible implementation, feature extraction may be performed by an embedding layer on the attribute information of the target user and the attribute information of the target item, to obtain the first target embedding representation corresponding to the attribute information of the target user and a second target embedding representation corresponding to the attribute information of the target item.

In a possible implementation, attributes in various dimensions of the target user and the target user may be separately processed by the embedding layer (embedding layer), to obtain an embedding vector corresponding to an attribute in each dimension.

For example, the attribute information of the target user includes user attributes in a plurality of dimensions, and the user attributes in the plurality of dimensions may be processed by the embedding layer to obtain a first initial embedding representation corresponding to the attribute information of the user. The first initial embedding representation includes a plurality of first embedding vectors, and each first embedding vector corresponds to a user attribute in one dimension.

In a possible implementation, a concatenation (concat) operation may be performed on the first embedding vectors to obtain the first feature representation. The first feature representation may be used as an input of a user-side branch (for example, the user-side encoder in the two-tower model) in a recommendation model.

For example, the attribute information of the target item includes item attributes in a plurality of dimensions, and the item attributes in the plurality of dimensions may be processed by the embedding layer to obtain a second initial embedding representation corresponding to the attribute information of the item. The second initial embedding representation includes a plurality of second embedding vectors, and each second embedding vector corresponds to an item attribute in one dimension.

In a possible implementation, a concatenation (concat) operation may be performed on the second embedding vectors to obtain the second feature representation. The second feature representation may be used as an input of an item-side branch (for example, an item-side encoder in the two-tower model) in the recommendation model.

In a possible implementation, after the concatenation operations are performed on the embedding vectors, concatenation results may not be used as the inputs of the recommendation model. Instead, a trained network may determine a weight distribution of the attributes in the dimensions based on the concatenation results, and adjust the concatenation results based on the weight distribution.

In a possible implementation, the first initial embedding representation corresponding to the attribute information of the user may be obtained. The first initial embedding representation includes the plurality of first embedding vectors, and each first embedding vector corresponds to the user attribute in one dimension. The first initial embedding representation is processed over a weight determining network, to obtain first weights of all the user attributes. The plurality of first embedding vectors are adjusted based on the first weights (for example, adjusted through weighing) to obtain the first target embedding representation.

In a possible implementation, the second initial embedding representation corresponding to the attribute information of the item may be obtained. The second initial embedding representation includes the plurality of second embedding vectors, and each second embedding vector corresponds to the item attribute in one dimension. The second initial embedding representation is processed over a weight determining network, to obtain second weights of all the item attributes. The plurality of second embedding vectors are adjusted based on the second weights (for example, adjusted through weighing) to obtain the second target embedding representation.

In the foregoing manner, weight-based adjustment is performed on different features, so that a better feature expression can be learned.

In a possible implementation, the weight determining network includes only one FC layer. Usually, a ranking model needs to use a multi-layer neural network to adjust weights of different features. This results in an excessively large quantity of parameters of the model. This application provides a lightweight model for weight adjustment based on feature importance, to reduce the quantity of parameters of the model while ensuring that the better feature expression can be learned.

The attribute information of the target user may be an attribute related to a preference feature of the user, and is at least one of a gender, an age, an occupation, an income, a hobby, and an education level. The gender may be a male or a female, the age may be a number ranging from 0 to 100, the occupation may be a teacher, a programmer, a cook, or the like, the hobby may be basketball, tennis, running, or the like, and the education level may be a primary school, a middle school, a high school, a university, or the like. A specific type of the attribute information of the target user is not limited in this application.

The item may be a physical item or a virtual item, for example, may be an item like an app, an audio/video, a web page, and news. The attribute information of the item may be at least one of an item name, a developer, an installation package size, a category, and a positivity rating. For example, the item is an application. The category of the item may be a chat category, a running game, an office category, or the like, and the positivity rating may be a score and a comment made on the item, or the like. A specific type of the attribute information of the item is not limited in this application.

According to a second aspect, this application provides a data processing method. The method includes:

obtaining a first feature representation and a second feature representation, where the first feature representation is obtained through feature extraction by a first encoder on attribute information of a target user, the second feature representation is obtained through feature extraction by a second encoder on attribute information of a target item, the first feature representation includes a plurality of first feature sub-representations, and the second feature representation includes a plurality of second feature sub-representations;

determining a plurality of similarities based on the plurality of first feature sub-representations and the plurality of second feature sub-representations, where each similarity is a similarity between one of the first feature sub-representations and one of the second feature sub-representations; and

fusing the plurality of similarities to obtain recommendation information between the target user and the target, where the recommendation information and a corresponding similarity annotation are used to determine a first loss, the first loss is used to update the first encoder and the second encoder, and the similarity annotation is obtained based on a real operation log of the target user.

In a possible implementation, a similarity between the first feature representation and the second feature representation is used to determine a second loss, and the second loss is used to update the first encoder and the second encoder; and when the real operation log indicates that the target user has a positive operation on the target item, the second loss indicates to maximize the similarity between the first feature representation and the second feature representation; or when the real operation log indicates that the target user has no operation on the target item or has a negative operation on the target item, the second loss indicates to minimize the similarity between the first feature representation and the second feature representation.

In this embodiment of this application, after the representations of the user and the item are obtained, an implicit self-supervised two-tower interaction module establishes implicit two-tower feature interaction through comparative learning, that is, shortens a distance between the user and a positive sample item, and extends a distance between the user and a negative sample item.

In a possible implementation, the plurality of first feature sub-representations are obtained by segmenting the first feature representation, and the plurality of second feature sub-representations are obtained by segmenting the second feature representation.

In a possible implementation, the plurality of similarities include a plurality of groups of similarities, and similarities in each group are:

similarities between one of the first feature sub-representations and the second feature sub-representations; or
similarities between one of the second feature sub-representations and the first feature sub-representations.

The fusing the plurality of similarities includes:
fusing maximum values of the plurality of similarities included in all the groups of similarities.

In a possible implementation,

the first encoder includes a plurality of first fully-connected layers, the first feature representation is obtained based on outputs of M first fully-connected layers in the plurality of first fully-connected layers, and M is a positive number greater than 1; or
the second encoder includes a plurality of second fully-connected layers, and the second feature representation is obtained based on an output of a second fully-connected layer that is in the plurality of second fully-connected layers and that is closest to an output layer.

In a possible implementation, the attribute information of the target user includes user attributes in a plurality of dimensions, and the first feature representation is obtained by processing, by the first encoder, a first target embedding representation corresponding to the attribute information of the target user; and the method further includes:

obtaining a first initial embedding representation corresponding to the attribute information of the user, where the first initial embedding representation includes a plurality of first embedding vectors, and each first embedding vector corresponds to a user attribute in one dimension;
processing the first initial embedding representation over a weight determining network, to obtain first weights of all the user attributes; and
adjusting the plurality of first embedding vectors based on the first weights, to obtain the first target embedding representation.

The first loss is further used to update the weight determining network.

According to a third aspect, this application provides a recommendation apparatus. The apparatus includes:

an obtaining module, configured to obtain a first feature representation and a second feature representation, where the first feature representation corresponds to attribute information of a target user, the second feature representation corresponds to attribute information of a target item, the first feature representation includes a plurality of first feature sub-representations, and the second feature representation includes a plurality of second feature sub-representations;
a data processing module, configured to: determine a plurality of similarities based on the plurality of first feature sub-representations and the plurality of second feature sub-representations, where each similarity is a similarity between one of the first feature sub-representations and one of the second feature sub-representations; and
fusing the plurality of similarities to obtain recommendation information between the target user and the target; and
a recommendation module, configured to: when the recommendation information meets a preset condition, determine to recommend the target item to the target user.

In a possible implementation, the plurality of first feature sub-representations are obtained by segmenting the first feature representation, and the plurality of second feature sub-representations are obtained by segmenting the second feature representation.

In a possible implementation, the plurality of similarities include a plurality of groups of similarities, and similarities in each group are:

similarities between one of the first feature sub-representations and the second feature sub-representations; or
similarities between one of the second feature sub-representations and the first feature sub-representations.

The fusing the plurality of similarities includes:

fusing maximum values of the plurality of similarities included in all the groups of similarities.

In a possible implementation, the first feature representation is obtained by a first encoder based on the attribute information of the target user, the first encoder includes a plurality of first fully-connected layers, the first feature representation is obtained based on outputs of M first fully-connected layers in the plurality of first fully-connected layers, and M is a positive number greater than 1.

In a possible implementation,

the second feature representation is obtained by a second encoder based on the attribute information of the target item, the second encoder includes a plurality of second fully-connected layers, and the second feature representation is obtained based on an output of a second fully-connected layer that is in the plurality of second fully-connected layers and that is closest to an output layer.

In a possible implementation, the attribute information of the target user includes user attributes in a plurality of dimensions. The first feature representation is obtained by processing, by the first encoder, a first target embedding representation corresponding to the attribute information of the target user.

The obtaining module is further configured to obtain a first initial embedding representation corresponding to the attribute information of the user. The first initial embedding representation includes a plurality of first embedding vectors, and each first embedding vector corresponds to a user attribute in one dimension.

The apparatus further includes a weight adjusting module, configured to: process the first initial embedding representation over a weight determining network, to obtain first weights of all the user attributes; and

adjust the plurality of first embedding vectors based on the first weights, to obtain the first target embedding representation.

In a possible implementation, the attribute information of the target item includes item attributes in a plurality of dimensions. The second feature representation is obtained by processing, by the second encoder, a second target embedding representation corresponding to the attribute information of the target item.

The obtaining module is further configured to obtain a second initial embedding representation corresponding to the attribute information of the item. The second initial embedding representation includes a plurality of second embedding vectors, and each second embedding vector corresponds to an item attribute in one dimension.

The apparatus further includes the weight adjusting module, configured to: process the second initial embedding representation over a weight determining network, to obtain second weights of all the item attributes; and

adjust the plurality of second embedding vectors based on the second weights, to obtain the second target embedding representation.

In a possible implementation, the weight determining network includes only one FC layer.

In a possible implementation, the attribute information of the target user includes at least one of the following: a gender, an age, an occupation, an income, a hobby, and an education level.

In a possible implementation, the attribute information of the target item includes at least one of the following: an item name, a developer, an installation package size, a category, and a positivity rating.

According to a fourth aspect, this application provides a data processing apparatus. The apparatus includes:

an obtaining module, configured to obtain a first feature representation and a second feature representation, where the first feature representation is obtained through feature extraction by a first encoder on attribute information of a target user, the second feature representation is obtained through feature extraction by a second encoder on attribute information of a target item, the first feature representation includes a plurality of first feature sub-representations, and the second feature representation includes a plurality of second feature sub-representations; and

a data processing module, configured to: determine a plurality of similarities based on the plurality of first feature sub-representations and the plurality of second feature sub-representations, where each similarity is a similarity between one of the first feature sub-representations and one of the second feature sub-representations; and

fuse the plurality of similarities to obtain recommendation information between the target user and the target, where the recommendation information and a corresponding similarity annotation are used to determine a first loss, the first loss is used to update the first encoder and the second encoder, and the similarity annotation is obtained based on a real operation log of the target user.

In a possible implementation, a similarity between the first feature representation and the second feature representation is used to determine a second loss, and the second loss is used to update the first encoder and the second encoder; and when the real operation log indicates that the target user has a positive operation on the target item, the second loss indicates to maximize the similarity between the first feature representation and the second feature representation; or when the real operation log indicates that the target user has no operation on the target item or has a negative operation on the target item, the second loss indicates to minimize the similarity between the first feature representation and the second feature representation.

In a possible implementation, the plurality of first feature sub-representations are obtained by segmenting the first feature representation, and the plurality of second feature sub-representations are obtained by segmenting the second feature representation.

In a possible implementation, the plurality of similarities include a plurality of groups of similarities, and similarities in each group are:

similarities between one of the first feature sub-representations and the second feature sub-representations; or
similarities between one of the second feature sub-representations and the first feature sub-representations.

The fusing the plurality of similarities includes:
fusing maximum values of the plurality of similarities included in all the groups of similarities.

In a possible implementation,

the first encoder includes a plurality of first fully-connected layers, the first feature representation is obtained based on outputs of M first fully-connected layers in the plurality of first fully-connected layers, and M is a positive number greater than 1; or
the second encoder includes a plurality of second fully-connected layers, and the second feature representation is obtained based on an output of a second fully-connected layer that is in the plurality of second fully-connected layers and that is closest to an output layer.

In a possible implementation, the attribute information of the target user includes user attributes in a plurality of dimensions. The first feature representation is obtained by processing, by the first encoder, a first target embedding representation corresponding to the attribute information of the target user.

The obtaining module is further configured to obtain a first initial embedding representation corresponding to the attribute information of the user. The first initial embedding representation includes a plurality of first embedding vectors, and each first embedding vector corresponds to a user attribute in one dimension.

The apparatus further includes a weight adjusting module, configured to: process the first initial embedding representation over a weight determining network, to obtain first weights of all the user attributes; and
adjust the plurality of first embedding vectors based on the first weights, to obtain the first target embedding representation.

The first loss is further used to update the weight determining network.

According to a fifth aspect, an embodiment of this application provides a recommendation apparatus. The apparatus may include a memory, a processor, and a bus system. The memory is configured to store a program, and the processor is configured to execute the program in the memory, to perform any optional method according to the first aspect.

According to a sixth aspect, an embodiment of this application provides a training apparatus. The apparatus may include a memory, a processor, and a bus system. The memory is configured to store a program, and the processor is configured to execute the program in the memory, to perform any optional method according to the second aspect.

According to a seventh aspect, an embodiment of this application provides a computer-readable storage medium. The computer-readable storage medium stores a computer program. When the computer program runs on a computer, the computer is enabled to perform the method in any one of the first aspect and the optional implementations of the first aspect and the method in any one of the second aspect and the optional implementations of the second aspect.

According to an eighth aspect, an embodiment of this application provides a computer program product, including code. When being executed, the code is used to implement the method in any one of the first aspect and the optional implementations of the first aspect and the method in any one of the second aspect and the optional implementations of the second aspect.

According to a ninth aspect, this application provides a chip system. The chip system includes a processor, configured to support an execution device or a training device in implementing the functions in the foregoing aspects, for example, sending or processing data or information in the foregoing methods. In a possible design, the chip system further includes a memory. The memory is configured to store program instructions and data that are necessary for the execution device or the training device. The chip system may include a chip, or may include a chip and another discrete component.

BRIEF DESCRIPTION OF DRAWINGS

FIG. 1 is a diagram of a structure of an artificial intelligence main framework;
FIG. 2 is a diagram of a system architecture according to an embodiment of this application;
FIG. 3 is a diagram of a system architecture according to an embodiment of this application;
FIG. 4 is a diagram of a recommendation flow scenario according to an embodiment of this application;

FIG. 5 is a schematic flowchart of a recommendation method according to an embodiment of this application;
FIG. 6 is a diagram of a recommendation model;
FIG. 7 is a schematic flowchart of a data processing method according to an embodiment of this application;
FIG. 8 is a diagram of a structure of a recommendation apparatus according to an embodiment of this application;
FIG. 9 is a diagram of a structure of a data processing apparatus according to an embodiment of this application;
FIG. 10 is a diagram of an execution device according to an embodiment of this application;
FIG. 11 is a diagram of a training device according to an embodiment of this application;
FIG. 12 is a diagram of a chip according to an embodiment of this application; and
FIG. 13 is a diagram of a type of experimental effect according to an embodiment of this application.

DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In this specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants thereof are intended to cover non-exclusive inclusion, so that a process, method, system, product, or device that includes a series of units is not necessarily limited to those units, but may include other units that are not expressly listed or are inherent to such a process, method, product, or device.

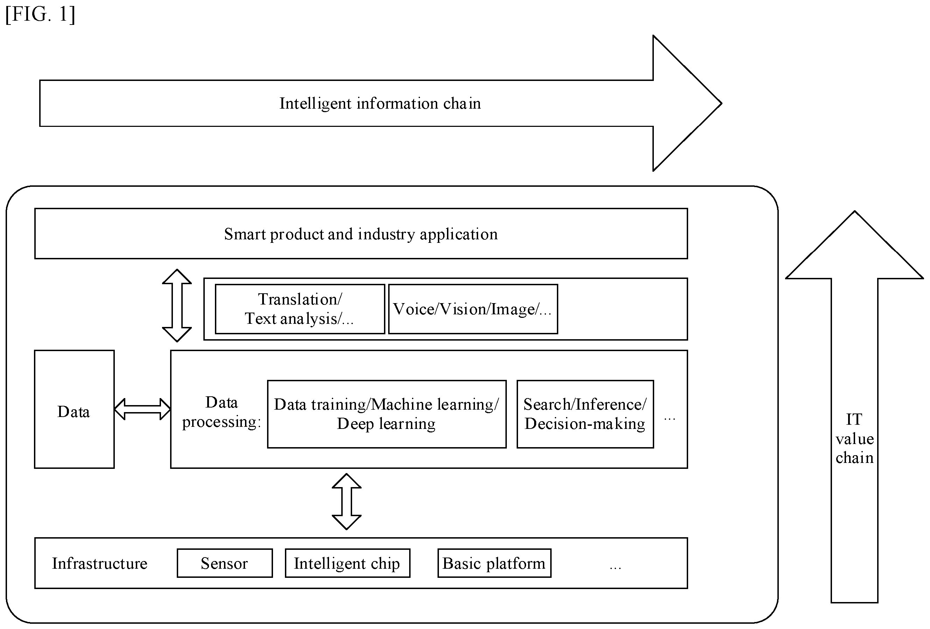

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip, for example, a CPU, an NPU, a GPU, an ASIC, or an FPGA). The basic platform may include related platforms, for example, a distributed computing framework and a network, for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to internet of things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which a human intelligent inference manner is simulated in a computer or an intelligent system, and machine thinking and problem resolving are performed by using formalized information according to an inference control policy. Typical functions are searching and matching.

Decision-making is a process of making a decision after intelligent information is inferred, and usually provides functions such as classification, ranking, and prediction.

(4) General capability

After data processing mentioned above is performed on data, some general-purpose capabilities may be further formed based on a data processing result. For example, the general-purpose capabilities may be an algorithm or a general system, for example, translation, text analysis, computer vision processing, speech recognition, and image recognition.

(5) Smart product and industry application

The smart product and industry application are products and applications of the artificial intelligence system in various fields. The smart product and industry application involve packaging overall artificial intelligence solutions, to productize and apply intelligent information decision-making. Application fields of the smart products and industry application mainly include intelligent terminals, intelligent transportation, intelligent health care, autonomous driving, smart cities, and the like.

Embodiments of this application may be applied to the information recommendation field. The scenario includes but is not limited to scenarios related to e-commerce product recommendation, search engine result recommendation, application market recommendation, music recommendation, and video recommendation. A recommended item in various different application scenarios may also be referred to as an "object" for ease of subsequent description. That is, in different recommendation scenarios, the recommended object may be an app, a video, music, or a commodity (for example, a presentation interface of an online shopping platform displays different commodities according to different users, which may also be presented by using a recommendation result of a recommendation model in essence). These recommendation scenarios usually involve collection of a user behavior log, log data preprocessing (for example, quantization and sampling), sample set training to obtain a recommendation model, and analysis and processing, based on the recommendation model, an object (for example, an app or music) in a scenario corresponding to a training sample item. For example, if a sample selected in a training stage of the recommendation model is from an operation performed by a user of an application market in a mobile phone on a recommended app, the recommendation model obtained through training is applicable to the app application market in the mobile phone, or may be used in an app application market in another type of terminal to recommend an app in the terminal. The recommendation model finally calculates a recommendation probability or a score of each to-be-recommended object. The recommendation system selects a recommendation result according to a specific selection rule, for example, performs ranking based on the recommendation probability or the score, and presents the recommendation result to the user by using a corresponding application or terminal device, and the user performs an operation on an object in the recommendation result to generate a user behavior log and another stage.

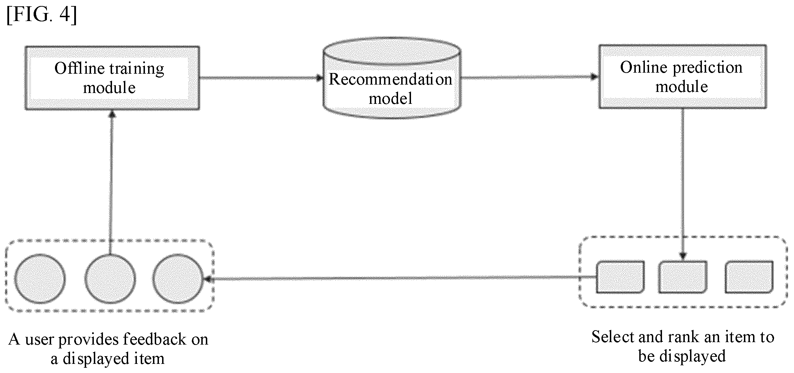

Refer to FIG. 4. In a recommendation process, when a user interacts with a recommendation system, a recommendation request is triggered. The recommendation system inputs the request and related feature information into a deployed recommendation model, and then predicts click-through rates of the user for all candidate objects. Then, the candidate objects are ranked in descending order of the predicted click-through rates, and the candidate objects are sequentially displayed at different locations as recommendation results for the user. The user browses displayed items and performs user behavior, such as browsing, clicking, and downloading. The user behavior is stored in a log as training data. An offline training module updates parameters of the recommendation model irregularly to improve recommendation effect of the model.

For example, when a user opens an application market in a mobile phone, a recommendation module in the application market may be triggered. The recommendation module in the application market predicts download possibilities of the user for given candidate applications based on a historical download record of the user, a clicking record of the user, a feature of the application, and environment feature information such as time and a location. Based on a prediction result, the application market displays the applications in descending order of the possibilities, to increase a download probability of the application. Specifically, an application that is more likely to be downloaded is ranked at a front location, and an application that is less likely to be downloaded is ranked at a back location. User behavior is also stored in a log, and a parameter of a prediction model is trained and updated by using an offline training module.

For another example, in a lifelong partner-related application, a cognitive brain may be constructed based on historical data of a user in domains such as video, music, and news, by using various models and algorithms, and by simulating a human brain mechanism, and a lifelong learning system framework of the user may be established. A lifelong partner may record a past event of the user based on system data, application data, and the like, understand a current intention of the user, predict a future action or future behavior of the user, and finally implement an intelligent service. In a current first stage, user behavior data (including device-side SMS messages, photos, and email events) is obtained based on a music app, a video app, a browser app, and the like to construct a user profile system, and to construct an individual knowledge graph of the user based on a learning and memory module for user information filtering, association analysis, cross-domain recommendation, causal inference, and the like.

The following describes an application architecture in embodiments of this application.

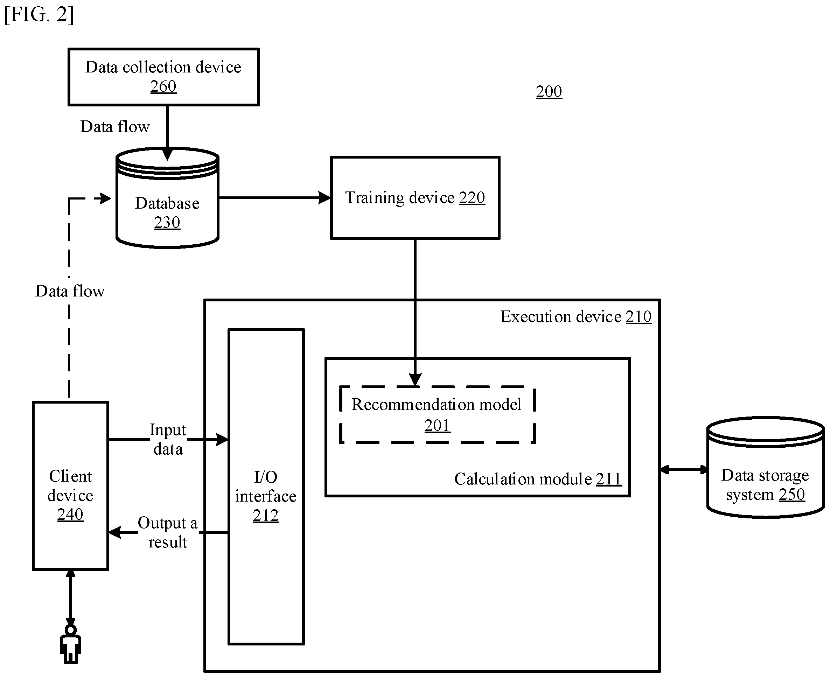

Refer to FIG. 2. An embodiment of the present invention provides a recommendation system architecture 200. A data collection device 260 is configured to collect a sample. One training sample may include a plurality of pieces of feature information (or described as attribute information, for example, a user attribute and an item attribute). There may be a plurality of types of feature information. The feature information may include user feature information, object feature information, and a label feature. The user feature information represents a feature of a user, for example, a gender, an age, an occupation, or a hobby. The object feature information represents a feature of an object pushed to the user. Different recommendation systems correspond to different objects, and types of features that need to be extracted for different objects are also different. For example, an object feature extracted from a training sample of an app market may be a name (an identifier), a type, a size, or the like of an app. An object feature extracted from a training sample of an e-commerce app may be a name, a category, a price range, or the like of a commodity. The label feature indicates whether the sample is a positive sample or a negative sample. Usually a label feature of a sample may be obtained based on operation information of the user for a recommended object. A sample in which the user performs an operation on a recommended object is a positive sample, and a sample in which the user does not perform an operation on a recommended object or just browses the recommended object is a negative sample. For example, when the user clicks, downloads, or purchases the recommended object, the label feature is 1, indicating that the sample is a positive sample, or if the user does not perform any operation on the recommended object, the label feature is 0, indicating that the sample is a negative sample. The sample may be stored in a database 230 after being collected. Some or all feature information in the sample in the database 230 may be directly obtained from a client device 240, for example, user feature information, information (used to determine a type identifier) about an operation performed by a user on an object, and object feature information (for example, an object identifier). A training device 220 obtains a model parameter matrix through training based on a sample in the database 230, to generate a recommendation model 201. The following describes in more detail how the training device 220 performs training to obtain the model parameter matrix used to generate the recommendation model 201. The recommendation model 201 can be used to evaluate a large quantity of objects to obtain a score of each to-be-recommended object, to further recommend a specified quantity of objects or a preset quantity of objects from an evaluation result of the large quantity of objects. A calculation module 211 obtains a recommendation result based on the evaluation result of the recommendation model 201, and recommends the recommendation result to the client device through an I/O interface 212.

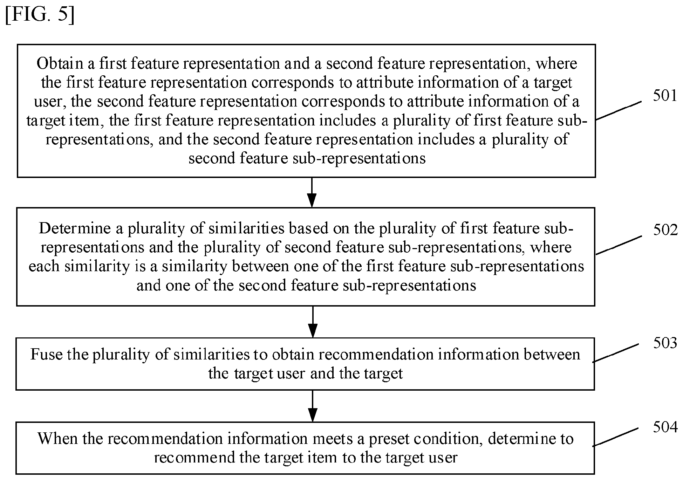

In this embodiment of this application, the training device 220 may select positive and negative samples from a sample set in the database 230, add the positive and negative samples to a training set, and then train the samples in the training set by using a recommendation model, to obtain a trained recommendation model. For implementation details of the calculation module 211, refer to detailed descriptions of a method embodiment shown in FIG. 5.

After the training device 220 obtains the model parameter matrix through training based on the sample to construct the recommendation model 201, the recommendation model 201 is sent to an execution device 210, or the model parameter matrix is directly sent to the execution device 210 to construct a recommendation model in the execution device 210 for recommendation of a corresponding system. For example, a recommendation model obtained through training based on a video-related sample may be used in a video website or an app to recommend a video to a user, and a recommendation model obtained through training based on an app-related sample may be used in an application market to recommend an app to a user.

The execution device 210 is provided with the I/O interface 212, to exchange data with an external device. The execution device 210 may obtain user feature information, for example, a user identifier, a user identity, a gender, an occupation, and a hobby, from the client device 240 through the I/O interface 212. This part of information may alternatively be obtained from a system database. The recommendation model 201 recommends a target to-be-recommended object to the user based on the user feature information and feature information of a to-be-recommended object. The execution device 210 may be disposed in a cloud server, or may be disposed in a user client.

The execution device 210 may invoke data, code, and the like in a data storage system 250, and may store output data in the data storage system 250. The data storage system 250 may be disposed in the execution device 210, may be independently disposed, or may be disposed in another network entity, and there may be one or more data storage systems 250.

The calculation module 211 processes the user feature information and the feature information of the to-be-recommended object by using the recommendation model 201. For example, the calculation module 211 analyzes and processes the user feature information and the feature information of the to-be-recommended object by using the recommendation model 201, to obtain a score of the to-be-recommended object, and ranks the to-be-recommended object based on the score. An object with a high ranking is used as an object recommended to the client device 240.

Finally, the I/O interface 212 returns the recommendation result to the client device 240, and presents the recommendation result to the user.

Furthermore, the training device 220 may generate corresponding recommendation models 201 for different targets based on different sample feature information, to provide a better result for the user.

It should be noted that, FIG. 2 is merely a diagram of the system architecture according to this embodiment of the present invention. A position relationship between devices, components, modules, and the like shown in the figure does not constitute any limitation. For example, in FIG. 2, the data storage system 250 is an external storage device relative to the execution device 210, and in another case, the data storage system 250 may alternatively be disposed in the execution device 210.

In this embodiment of this application, the training device 220, the execution device 210, and the client device 240 may be three different physical devices, or the training device 220 and the execution device 210 may be on a same physical device or one cluster, or the execution device 210 and the client device 240 may be on a same physical device or one cluster.

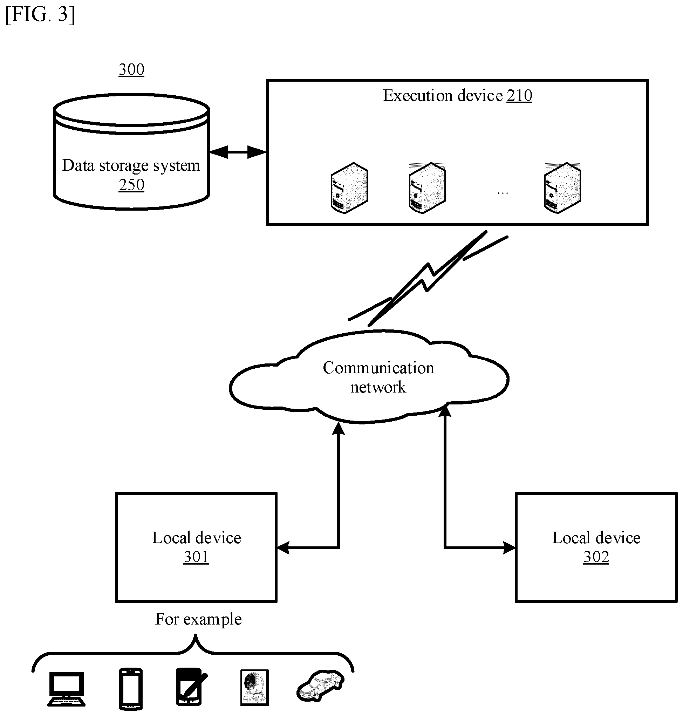

Refer to FIG. 3. An embodiment of the present invention provides a system architecture 300. In this architecture, an execution device 210 is implemented by one or more servers. Optionally, the execution device 210 cooperates with another computing device, for example, a device like a data storage device, a router, or a load balancer. The execution device 210 may be disposed on one physical site, or distributed on a plurality of physical sites. The execution device 210 may use data in a data storage system 250 or invoke program code in the data storage system 250 to implement an object recommendation function. Specifically, information about to-be-recommended objects is input into a recommendation model, and the recommendation model generates an estimated score for each to-be-recommended object, then ranks the to-be-recommended objects in descending order of the estimated scores, and recommends the to-be-recommended objects to a user based on a ranking result. For example, top 10 objects in the ranking result are recommended to the user.

The data storage system 250 is configured to receive and store a parameter of a recommendation model sent by a training device, is configured to store data of a recommendation result obtained by using the recommendation model, and certainly may further include program code (or an instruction) needed for normal running of the storage system 250. The data storage system 250 may be one device that is deployed outside the execution device 210 or a distributed storage cluster including a plurality of devices that are deployed outside the execution device 210. In this case, when the execution device 210 needs to use the data in the storage system 250, the storage system 250 may send the data needed by the execution device to the execution device 210. Correspondingly, the execution device 210 receives and stores (or temporarily buffers) the data. Certainly, the data storage system 250 may be alternatively deployed on the execution device 210. When deployed on the execution device 210, the distributed storage system may include one or more memories. Optionally, when there are a plurality of memories, different memories are configured to store different types of data, for example, the model parameter of the recommendation model generated by the training device and the data of the recommendation result obtained by using the recommendation model may be separately stored in two different memories.

Users may operate their user devices (for example, the local device 301 and the local device 302) to interact with the execution device 210. Each local device may represent any computing device, for example, a personal computer, a computer workstation, a smartphone, a tablet computer, an intelligent camera, a smart automobile, another type of cellular phone, a media consumption device, a wearable device, a set-top box, or a game console.

The local device of each user may interact with the execution device 210 through a communication network compliant with any communication mechanism/communication standard. The communication network may be a wide area network, a local area network, a point-to-point connection, or any combination thereof.

In another implementation, the execution device 210 may be implemented by a local device. For example, the local device 301 may implement a recommendation function of the execution device 210 based on a recommendation model, to obtain user feature information and feed back a recommendation result to a user, or provide a service for the user of the local device 302.

Embodiments of this application relate to massive application of a neural network. Therefore, for ease of understanding, the following first describes terms and concepts related to the neural network in embodiments of this application.

1. Click-through rate (click-through rate, CTR)

The click-through rate is a ratio of a quantity of times recommendation information (for example, a recommended item) on a website or an application is clicked to a quantity of times of exposure of the recommendation information. The click-through rate is usually an important indicator for measuring a recommendation system in recommendation systems.

2. Personalized recommendation system

The personalized recommendation system is a system that performs analysis by using a machine learning algorithm based on historical data of a user (for example, operation information in embodiments of this application), predicts a new request on this basis, and provides a personalized recommendation result.

3. Offline training (offline training)

The offline training is a module, in a personalized recommendation system, that iteratively updates parameters of a recommendation model by using a machine learning algorithm based on historical data of a user (for example, operation information in embodiments of this application) until a specified requirement is met.

4. Online inference (online inference)

The online inference is to predict, based on a model obtained through offline training, favorability of a user for a recommended item in a current context environment based on features of the user, the item, and a context, and predict a probability that the user selects the recommended item.

5. Two-tower model: Large quantities of users and items exist in a large-scale industrial retrieval system, and user request response time needs to be strictly controlled within dozens of milliseconds. Therefore, a two-tower model is usually used in the industrial retrieval system to model users and items. The two-tower model includes two towers: a user tower and an item tower. The two towers respectively model a user and an item, and pre-store modeled item information to an online server. When a new user request arises, modeling is required for only the user request, and modeled user information and the pre-stored item information are used for calculating scores, to greatly reduce a calculation delay.

For example, FIG. 3 is a diagram of a recommendation system according to an embodiment of this application. As shown in FIG. 3, when a user enters a system, a recommendation request is triggered. The recommendation system inputs the request and related information (for example, operation information in this embodiment of this application) of the request into a recommendation model, and then predicts a selectivity of the user for an item in the system. Further, items are ranked in descending order of predicted selectivities or a function of the selectivities. That is, the recommendation system may sequentially display the items at different locations as a recommendation result for the user. The user browses the items at different locations, and performs user behavior such as browsing, selecting, and downloading. In addition, actual behavior of the user is stored in a log as training data. Parameters of the recommendation model are continuously updated by using an offline training module, to improve prediction effect of the model.

For example, when the user opens an application market in an intelligent terminal (for example, a mobile phone), a recommendation system in the application market may be triggered. The recommendation system in the application market predicts, based on a historical behavior log of the user, for example, a historical download record of the user and a user selection record, and a feature of the application market, for example, environment feature information such as time and a location, probabilities that the user downloads candidate recommended apps. Based on a calculation result, the recommendation system in the application market may display the candidate apps in descending order of values of the predicted probabilities, to increase a download probability of the candidate app.

For example, an app with a high predicted user selectivity may be displayed at a front recommendation location, and an app with a low predicted user selectivity may be displayed at a back recommendation location.

The recommendation model may be a neural network model. The following describes related terms and concepts of a neural network that may be used in embodiments of this application.

(1) Neural network

The neural network may include a neuron. The neuron may be an operation unit that uses xs (namely, input data) and an intercept of 1 as an input. An output of the operation unit may be as follows:

$$h_{W,b}(x) = f(W^T x) = f(\sum_{s=1}^{n} W_s x_s + b),$$

where
s=1, 2, ..., and n, n is a natural number greater than 1, Ws is a weight of xs, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of single neural units together. To be specific, an output of a neural unit may be an input of another neural unit. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multi-layer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$, where $\vec{x}$ is an input vector, $\vec{y}$ is an output vector, $\vec{b}$ is a bias vector, W is a weight matrix (also referred to as a coefficient), and $\alpha()$ is an activation function. At each layer, the output vector $\vec{y}$ is obtained by performing such a simple operation on the input vector $\vec{x}$. Because there are many layers in the DNN, there are also many coefficients W and bias vectors $\vec{b}$. Definitions of these parameters in the DNN are as follows: The coefficient W is used as an example. It is assumed that in a three-layer DNN, a linear coefficient from the fourth neuron at the second layer to the second neuron at the third layer is defined as $W_{24}^{3}$. The superscript 3 represents a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is repeatedly performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss.

(4) Back propagation algorithm

An error back propagation (back propagation, BP) algorithm may be used to correct a value of a parameter in an initial model in a training process, so that an error loss of the model becomes smaller. Specifically, an input signal is transferred forward until an error loss occurs at output, and the parameter in the initial model is updated based on back propagation error loss information, to make the error loss converge. The back propagation algorithm is an error-loss-centered back propagation motion intended to obtain a parameter, for example, a weight matrix, of an optimal model.

A large-scale industrial information retrieval system (for example, a recommendation system, a search engine, or a computing advertisement) aims to provide data (for example, an item, information, or an advertisement) that a user is most interested in for the user by retrieving massive data (for example, items, information, or advertisements). However, due to information explosion on the internet, each platform generates hundreds of millions of pieces of new information every day, which brings great challenges to the information retrieval system. In addition, because system response time acceptable to a user is very short (dozens of milliseconds), retrieving data that the user is most interested in within such short time becomes a primary task of the information retrieval system.

Generally, a complex machine learning model can better simulate a relationship between a user and an item, and therefore has better prediction accuracy. However, due to a limitation of a delay requirement of online inference, efficiency is usually low, deployment becomes more difficult, and only a small quantity of items can be scored. On the contrary, a simple model is feasible in terms of efficiency due to its low complexity. Therefore, a large number of items can be scored. However, due to a small capacity of the model, prediction results are often unsatisfying. Therefore, constructing a multi-stage cascade ranking system is a common solution for information retrieval systems in the industry to balance prediction efficiency and effect. The multi-stage cascade ranking system is shown in FIG. 1, and includes a plurality of stages such as recall, pre-ranking, ranking, and re-ranking. In each stage, different systems face different quantities of item candidate sets.

In the pre-ranking stage, usually thousands of items need to be ranked and scored. In this stage, if a complex model is used, an inference delay increases, resulting in poor user experience. Therefore, in a large-scale commercial retrieval system, in the pre-ranking stage, a simple machine learning model, for example, a tree model or a two-tower model, is usually used to model user information and item information, to reduce an online inference delay and improve user service experience.

A common two-tower model is a popular model currently used in a pre-ranking stage in the industry, and usually includes two parts: a user tower and an item tower. In a training stage of the model, the user tower and the item tower respectively model user information and item information, and then score the information. In an online deployment stage of the model, the modeled item information is usually pre-stored on a server. For each user request, only the user information needs to be modeled, the modeled user information and the pre-stored item information are used for calculating scores, and then ranking is performed based on the scores.

However, the existing common two-tower model separately models the user and the item, and lacks interaction information between the user and the item. The common two-tower model performs interaction scoring on the user information and the item information only when calculating the scores for ranking. This is a delayed interaction strategy. Due to the lack of the interaction information between the user and the item, this strategy reduces accuracy of the model.

To resolve the problem, this application provides a recommendation method. The following uses a model inference stage as an example to describe an information recommendation method provided in an embodiment of this application.

FIG. 5 is a diagram of an embodiment of a recommendation method according to an embodiment of this application. As shown in FIG. 5, the recommendation method provided in this embodiment of this application includes the following steps.

501: Obtain a first feature representation and a second feature representation, where the first feature representation corresponds to attribute information of a target user, the second feature representation corresponds to attribute information of a target item, the first feature representation includes a plurality of first feature sub-representations, and the second feature representation includes a plurality of second feature sub-representations.

In this embodiment of this application, step 501 may be executed by a terminal device, and the terminal device may be a portable mobile device, for example, but not limited to a mobile or portable computing device (for example, a smartphone), a personal computer, a server computer, a handheld device (for example, a tablet) or a laptop device, a multiprocessor system, a game console or controller, a microprocessor-based system, a set-top box, a programmable consumer electronic product, a mobile phone, a mobile computing and/or communication device having a wearable or accessory form factor (for example, a watch, glasses, a headset, or an earplug), a network PC, a small computer, a mainframe computer, and a distributed computing environment including any of the foregoing systems or devices.

In this embodiment of this application, step 501 may be executed by a server on a cloud side.

For ease of description, forms of execution bodies are not distinguished below, and are all described as an execution device.

In a possible implementation, to calculate a probability that the target user selects the target item, the execution device may obtain the attribute information of the target user and the attribute information of the target item.

The attribute information of the target user may be an attribute related to a preference feature of the user, and is at least one of a gender, an age, an occupation, an income, a hobby, and an education level. The gender may be a male or a female, the age may be a number ranging from 0 to 100, the occupation may be a teacher, a programmer, a cook, or the like, the hobby may be basketball, tennis, running, or the like, and the education level may be a primary school, a middle school, a high school, a university, or the like. A specific type of the attribute information of the target user is not limited in this application.

The item may be a physical item or a virtual item, for example, may be an item like an app, an audio/video, a web page, and news. The attribute information of the item may be at least one of an item name, a developer, an installation package size, a category, and a positivity rating. For example, the item is an application. The category of the item may be a chat category, a running game, an office category, or the like, and the positivity rating may be a score and a comment made on the item, or the like. A specific type of the attribute information of the item is not limited in this application.

It should be understood that, in a possible implementation, original embedding representations of the user and the item may be first compressed by using, but not limited to, an average pooling method, to obtain global information. For example, a compression process may be performed with reference to the following formula:

$$z_i = f_{sq}(\mathbf{e}_i) = \frac{1}{d} \sum_{t=1}^{d} \mathbf{e}_i^d.$$

In a possible implementation, feature extraction may be performed by an embedding layer on the attribute information of the target user and the attribute information of the target item, to obtain a first target embedding representation corresponding to the attribute information of the target user and a second target embedding representation corresponding to the attribute information of the target item.

In a possible implementation, attributes in various dimensions of the target user and the target user may be separately processed by the embedding layer (embedding layer), to obtain an embedding vector corresponding to an attribute in each dimension.

For example, the attribute information of the target user includes user attributes in a plurality of dimensions, and the user attributes in the plurality of dimensions may be processed by the embedding layer to obtain a first initial embedding representation corresponding to the attribute information of the user. The first initial embedding representation includes a plurality of first embedding vectors, and each first embedding vector corresponds to a user attribute in one dimension.

In a possible implementation, a concatenation (concat) operation may be performed on the first embedding vectors to obtain the first feature representation. The first feature representation may be used as an input of a user-side branch (for example, a user-side encoder in a two-tower model) in a recommendation model.

For example, the attribute information of the target item includes item attributes in a plurality of dimensions, and the item attributes in the plurality of dimensions may be processed by the embedding layer to obtain a second initial embedding representation corresponding to the attribute information of the item. The second initial embedding representation includes a plurality of second embedding vectors, and each second embedding vector corresponds to an item attribute in one dimension.

In a possible implementation, a concatenation (concat) operation may be performed on the second embedding vectors to obtain the second feature representation. The second feature representation may be used as an input of an item-side branch (for example, an item-side encoder in the two-tower model) in the recommendation model.

In a possible implementation, after the concatenation operations are performed on the embedding vectors, concatenation results may not be used as the inputs of the recommendation model. Instead, a trained network may determine a weight distribution of the attributes in the dimensions based on the concatenation results, and adjust the concatenation results based on the weight distribution.

In a possible implementation, the first initial embedding representation corresponding to the attribute information of the user may be obtained. The first initial embedding representation includes the plurality of first embedding vectors, and each first embedding vector corresponds to the user attribute in one dimension. The first initial embedding representation is processed over a weight determining network, to obtain first weights of all the user attributes. The plurality of first embedding vectors are adjusted based on the first weights (for example, adjusted through weighing) to obtain the first target embedding representation.

In a possible implementation, the second initial embedding representation corresponding to the attribute information of the item may be obtained. The second initial embedding representation includes the plurality of second embedding vectors, and each second embedding vector corresponds to the item attribute in one dimension. The second initial embedding representation is processed over a weight determining network, to obtain second weights of all the item attributes. The plurality of second embedding vectors are adjusted based on the second weights (for example, adjusted through weighing) to obtain the second target embedding representation.

In the foregoing manner, weight-based adjustment is performed on different features, so that a better feature expression can be learned.

In a possible implementation, the weight determining network includes only one FC layer. Usually, a ranking model needs to use a multi-layer neural network to adjust weights of different features. This results in an excessively large quantity of parameters of the model. This application provides a lightweight model for weight adjustment based on feature importance, to reduce the quantity of parameters of the model while ensuring that the better feature expression can be learned.

For example, a weight may be determined with reference to the following formula:

$$\mathbf{k} = f_{ex}(\mathbf{z}) = softmax(\mathbf{W}\mathbf{z} + \mathbf{b}).$$

For example, a feature may be adjusted with reference to the following formula:

$$\tilde{\mathbf{e}} = f_{rw}(\mathbf{k}, \mathbf{e}) = [k_1 \cdot \mathbf{e}_1, k_2 \cdot \mathbf{e}_2, \dots, k_m \cdot \mathbf{e}_m].$$

In a possible implementation, after a first target embedding representation corresponding to the attribute information of the target user is obtained, the first target embedding representation corresponding to the attribute information of the target user may be processed by a first encoder to obtain the first feature representation, that is, the first feature representation is obtained by processing, by the first encoder, the first target embedding representation corresponding to the attribute information of the target user.

In a possible implementation, the first encoder includes a plurality of first fully-connected layers, the first feature representation is obtained based on outputs of M first fully-connected layers in the plurality of first fully-connected layers, and M is a positive number greater than 1.

After the feature representation corresponding to the user is obtained, interaction information at different levels may be modeled based on a plurality of layers of user representations output by the first encoder on a user side in the two-tower model. In the conventional technology, modeling is performed based on only a feature representation output by a last layer of the user-side encoder in the two-tower model, which is a coarse-grained modeling manner. In this application, modeling is performed based on a plurality of layers of user representations, so that subsequent prediction effect can be improved.

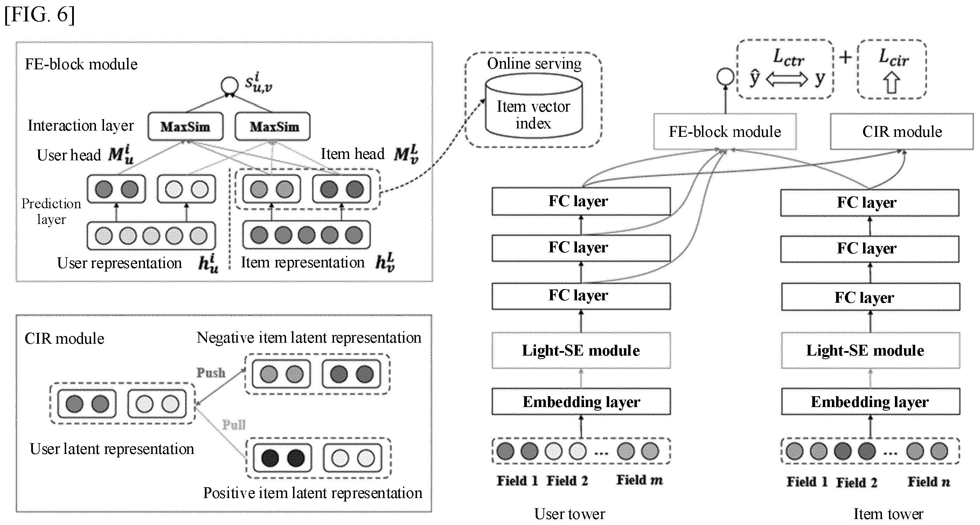

FIG. 6 is a schematic flowchart of processing of a recommendation model. A first encoder may include a plurality of fully-connected FC layers, and outputs of last three fully-connected layers may be used to determine a first feature representation.

In a possible implementation, further learning may be performed on an extracted feature representation (for example, the outputs of the M first fully-connected layers) of a user, to obtain a better user feature expression (for example, the first feature representation).

In a possible implementation, a second feature representation is obtained by processing, by a second encoder, a second target embedding representation corresponding to attribute information of a target item.

In a possible implementation, the second encoder includes a plurality of second fully-connected layers, and the second feature representation is obtained based on an output of a second fully-connected layer that is in the plurality of second fully-connected layers and that is closest to an output layer.

FIG. 6 is a schematic flowchart of processing of a recommendation model. A second encoder may include a plurality of fully-connected FC layers, and an output of a last fully-connected layer may be used to determine a second feature representation.

In a possible implementation, further learning may be performed on an extracted feature representation (for example, the output of the second fully-connected layer closest to the output layer) of an item, to obtain a better item feature expression (for example, the second feature representation).

For example, further learning may be performed on user or item feature representations with reference to the following formula:

$$\mathbf{m}_u^{i,h} = \sigma(\mathbf{W}_u^{i,h} \mathbf{h}_u^i + \mathbf{b}_u^{i,h}), \qquad h = 1, 2, \dots, H \quad;$$

and

$$\mathbf{m}_v^{L,h} = \sigma(\mathbf{W}_v^{L,h} \mathbf{h}_v^L + \mathbf{b}_v^{L,h}), \qquad h = 1, 2, \dots, H \quad.$$

In a possible implementation, after the first feature representation of the user and the second feature representation of the item are obtained, interaction between a user-side branch and an item-side branch in the two-tower model may be performed based on the first feature representation and the second feature representation.

502: Determine a plurality of similarities based on the plurality of first feature sub-representations and the plurality of second feature sub-representations, where each similarity is a similarity between one of the first feature sub-representations and one of the second feature sub-representations.

503: Fuse the plurality of similarities to obtain recommendation information between the target user and the target.

In a possible implementation, the first feature representation includes the plurality of first feature sub-representations, and the second feature representation includes the plurality of second feature sub-representations. For example, the plurality of first feature sub-representations are obtained by segmenting the first feature representation, and the plurality of second feature sub-representations are obtained by segmenting the second feature representation.

In a possible implementation, in an interaction stage, obtained user and item representations are sliced, similarities between all slices are calculated and maximum values are obtained, and then multi-level aggregation is performed on user-item interaction scores at all levels, to obtain a final interaction score.

In a possible implementation, the plurality of similarities may include a plurality of groups of similarities, and similarities in each group may be: similarities between one of the first feature sub-representations and the second feature sub-representations; or similarities between one of the second feature sub-representations and the first feature sub-representations. When the plurality of similarities are fused, maximum values of the plurality of similarities included in all the groups of similarities may be fused to obtain the recommendation information between the target user and the target.

In a possible implementation, as shown in FIG. 6, for each first feature sub-representation, a similarity between the first feature sub-representation and each second feature sub-representation may be calculated to obtain one group of similarities, and a maximum value may be obtained for a plurality of similarities in one group of similarities. Similarly, one group of similarities may be obtained for each first feature sub-representation, a maximum value may be obtained for a plurality of similarities in one group of similarities, to obtain a plurality of maximum values, and maximum values of the plurality of similarities may be fused.

In an implementation, a fusion manner may be an addition operation (optionally, an addition result may be further normalized to a value between 0 and 1), and the recommendation information indicates a probability that the target user selects the target item.

The following provides a specific example of the interaction stage. In the interaction stage, obtained user and item representations may be sliced, similarities between all slices are calculated and maximum values are obtained, and then multi-level aggregation is performed on user-item interaction scores at all levels, to obtain a final interaction score. For example, the interaction stage may be performed according to the following formula:

$$S_{u,v}^i = \sum_{h_u=1}^{H} \max_{h_v \in 1,2,\ldots,H} (m_u^{i,h_u})^T \cdot m_v^{L,h_v}. \quad ;$$

and

$$\hat{y} = \sum_{i=1}^{|L|} S_{u,v}^i.$$

In this embodiment of this application, interaction information between the user and the item is modeled based on a similarity between slices of the feature representations of the user and the item, that is, the interaction information between the user and the item is explicitly modeled, no additional parameter needs to be added in an interaction stage, and better prediction effect can be achieved.

504: When the recommendation information meets a preset condition, determine to recommend the target item to the target user.

In the foregoing manner, a probability that the target user selects the target item may be obtained, and information recommendation is performed based on the probability. Specifically, when the recommendation information meets the preset condition, it may be determined that the target item is recommended to the target user.

The following describes the preset condition.

In a possible implementation, when information is recommended to the target user, probabilities that the target user selects a plurality of items (including the target item) may be calculated, and recommendation indexes of the items for the target user are determined based on the probabilities that the user selects the plurality of items (including the target item).

After the recommendation indexes of the items for the target user are obtained, the recommendation indexes may be ranked, and M items with largest recommendation indexes are recommended to the target user.

In a possible implementation, a probability threshold may alternatively be set. When a probability that the target user selects the plurality of items (including the target item) is greater than the probability threshold, a recommendation may be made to the target user.

During information recommendation, recommendation information may be recommended to the user in a form of a list page, to expect the user to perform a behavior action.

Browser information flow recommendation is used as an example. A specific procedure in this embodiment of this application may be as follows.

(1) First, data is used to train the interactively enhanced two-tower model offline, and then trained item representations are pre-stored on an online server.

(2) The model is deployed online. Each time a new user request arrives, the user tower performs modeling analysis on the user to obtain a user representation of the user.

(3) An item representation pre-stored online is obtained. The user representation and the item representation are segmented into a plurality of blocks. Maximum similarities of the blocks are separately calculated, and a sum thereof is calculated to obtain similarity scores of the user and items. The items are ranked based on the scores, and items with highest scores are obtained through filtering and sent to a ranking model.

The following describes technical effect of this embodiment of this application with reference to an experiment.

An offline experiment is performed on three public datasets. Three indicators are selected as experiment evaluation indicators:

Ranking: area under curve (AUC), logistic loss (Logloss), and relative improvement (RelaImpr)

The following are experiment results on the three public datasets:

| Stage | Model | MovieLens | | | Amazon | | | Alibaba | | |
|---|---|---|---|---|---|---|---|---|---|---|
| | | AUC | Logloss | RelaImpr | AUC | Logloss | RelaImpr | AUC | Logloss | RelaImpr |
| Pre-Ranking | LR | 0.8501 | 0.4845 | -5.30% | 0.7952 | 0.4677 | -14.9% | 0.6496 | 0.2350 | -5.85% |
| | Two-Tower | 0.8697 | 0.4559 | 0% | 0.8469 | 0.4313 | 0% | 0.6579 | 0.2292 | 0% |
| | DAT | 0.8712 | 0.4556 | 0.40% | 0.8480 | 0.4278 | 0.31% | 0.6598 | 0.2279 | 0.56% |
| | COLD | 0.8836 | 0.3297 | 3.75% | 0.8633 | 0.3402 | 4.72% | 0.6816 | 0 2248 | 14.28% |
| Ranking* | Wide&Deep | 0.8820 | 0.3344 | 3.32% | 0.8615 | 0.3409 | 4.20% | 0.6814 | 0.2250 | 14.15% |
| | DeepFM | 0.8920 | 0.3211 | 6.03% | 0.8643 | 0.3405 | 5.0-5% | 0.6820 | 0.2247 | 14.53% |
| | DCN | 0.8964 | 0.3151 | 7.22% | 0.8665 | 0.3366 | 5.65% | 0.6831 | 0.2244 | 15.22% |
| | AutoInt | 0.8948 | 0.3192 | 6.79% | 0.8686 | 0.3351 | 6.25% | **0.6867** | **0.2238** | **17.49%** |
| | IntTower (ours) | **0.8974*** | **0.3128*** | **7.49%** | **0.8696*** | **0.3309*** | **7.91%** | 0.6827* | 0.2245* | 14.97% |

\* Generally speaking, the prediction accuracy of ranking models is much higher than that of the pre-ranking models by a large margin [18, 33]. To fully demonstrate the superior prediction accuracy of IntTower, we compare it with some SOTA ranking models and are delighted to find that the performance is *comparable* and even *exceeded* in some cases.

EP 4 567 632 A1

| Stage | Model | AUC | Logloss | RelaImpr |
|---|---|---|---|---|
| Pre-Ranking | Two-Tower | 0.7550 | 0.0536 | 0% |
| | IntTower | 0.7603 | 0.0523 | 2.08% |
| Ranking | DeepFM | 0.7591 | 0.0525 | 1.61% |
| | EDCN | 0.7612 | 0.0518 | 2.43% |

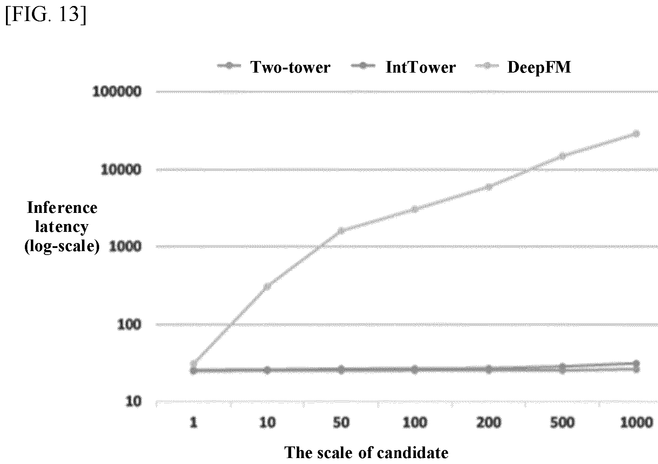

The following table and FIG. 13 are training and inference efficiency of the present invention:

| | MovieLens | | Amazon | |
|---|---|---|---|---|
| Model | Params | Run Time | Params | Run Time |
| LR | $5.24\times10^4$ | 11s | $5.10\times10^5$ | 27s |
| Two-Tower | $5.03\times10^5$ | 15s | $6.26\times10^6$ | 35s |
| COLD | $6.83\times10^5$ | 18s | $8.58\times10^6$ | 42s |
| DCN | $6.84\times10^5$ | 19s | $8.58\times10^6$ | 43s |
| AutoInt | $6.95\times10^5$ | 19s | $8.59\times10^6$ | 42s |
| IntTower | $5.67\times10^5$ | 16s | $6.29\times10^6$ | 40s |

After the experiment, it can be seen from performance of the model that, accuracy of the recommendation model provided in this embodiment of this application is higher than that of most existing pre-ranking models. In addition, in terms of training and inference efficiency, the training and inference efficiency of this model is close to that of the two-tower model, and an inference delay is significantly lower than that of a single-tower model.

This application provides a recommendation method. The method includes: obtaining a first feature representation and a second feature representation, where the first feature representation corresponds to attribute information of a target user, the second feature representation corresponds to attribute information of a target item, the first feature representation includes a plurality of first feature sub-representations, and the second feature representation includes a plurality of second feature sub-representations; determining a plurality of similarities based on the plurality of first feature sub-representations and the plurality of second feature sub-representations, where each similarity is a similarity between one of the first feature sub-representations and one of the second feature sub-representations; fusing the plurality of similarities to obtain recommendation information between the target user and the target; and when the recommendation information meets a preset condition, determining to recommend the target item to the target user. In this embodiment of this application, interaction information between the user and the item is modeled based on a similarity between slices of the feature representations of the user and the item, that is, the interaction information between the user and the item is explicitly modeled, no additional parameter needs to be added in an interaction stage, and better prediction effect can be achieved.

The foregoing describes the recommendation method provided in this embodiment of this application from a perspective of a model inference process, and the following describes a model training process.

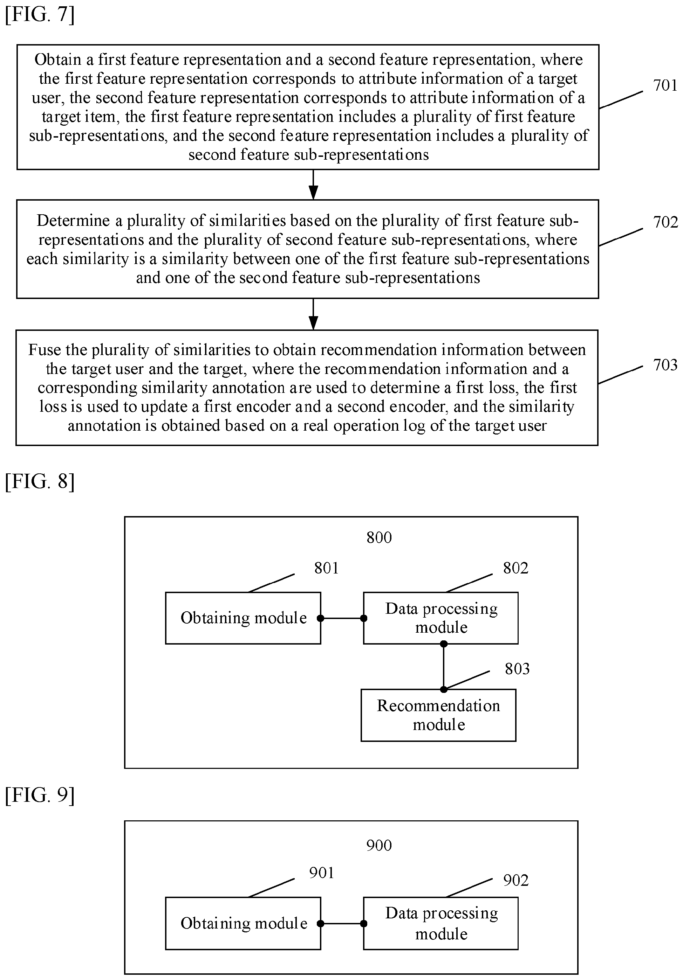

FIG. 7 is a schematic flowchart of a model training method according to an embodiment of this application. As shown in FIG. 7, the model training method provided in this embodiment of this application includes the following steps.

701: Obtain a first feature representation and a second feature representation, where the first feature representation is obtained through feature extraction by a first encoder on attribute information of a target user, the second feature representation is obtained through feature extraction by a second encoder on attribute information of a target item, the first feature representation includes a plurality of first feature sub-representations, and the second feature representation includes a plurality of second feature sub-representations.

702: Determine a plurality of similarities based on the plurality of first feature sub-representations and the plurality of second feature sub-representations, where each similarity is a similarity between one of the first feature sub-representations and one of the second feature sub-representations.

703: Fuse the plurality of similarities to obtain recommendation information between the target user and the target, where the recommendation information and a corresponding similarity annotation are used to determine a first loss, the first loss is used to update the first encoder and the second encoder, and the similarity annotation is obtained based on a real operation log of the target user.

In a possible implementation, a similarity between the first feature representation and the second feature representation is used to determine a second loss, and the second loss is used to update the first encoder and the second encoder; and when the real operation log indicates that the target user has a positive operation on the target item, the second loss indicates to maximize the similarity between the first feature representation and the second feature representation; or when the real operation log indicates that the target user has no operation on the target item or has a negative operation on the target item, the second loss indicates to minimize the similarity between the first feature representation and the second feature representation.

The negative operation may indicate that the user has an operation on the item, but the operation indicates that the user has no intention to select the item, for example, a complaint operation or an order cancellation operation.

In this embodiment of this application, after the representations of the user and the item are obtained, an implicit self-supervised two-tower interaction module establishes implicit two-tower feature interaction through comparative learning, that is, shortens a distance between the user and a positive sample item, and extends a distance between the user and a negative sample item.

$$\mathcal{L}_{cir} = -\frac{1}{Q} \sum_{(u,v) \in Q} log \frac{exp(sim(M_u^L, M_v^L)/\tau)}{\sum_{(u',v') \in N} exp(sim(M_u^L, M_{v'}^L)/\tau)} .$$

In a final model training process, $L_{ctr}$ and $L_{cir}$ may be used to jointly train the model. $L_{ctr}$ is a loss function for calculating a difference between a predicted value and a real value, and $L_{cir}$ is a loss function for calculating a distance between a user and a positive/negative item pair in implicit space.

$$\mathcal{L}_{ctr} = -\frac{1}{N} \sum_{i=1}^{N} (y_i log(\hat{y_i}) + (1 - y_i) log(1 - \hat{y_i}));$$

and

$$\mathcal{L} = \mathcal{L}_{ctr} + \lambda_1 \mathcal{L}_{cir} + \lambda_2 \|\Theta\|_2.$$

In a possible implementation, the plurality of first feature sub-representations are obtained by segmenting the first feature representation, and the plurality of second feature sub-representations are obtained by segmenting the second feature representation.

In a possible implementation, the plurality of similarities include a plurality of groups of similarities, and similarities in each group are: similarities between one of the first feature sub-representations and the second feature sub-representations; or similarities between one of the second feature sub-representations and the first feature sub-representations. When the plurality of similarities are fused, specifically maximum values of the plurality of similarities included in all the groups of similarities may be fused.

In a possible implementation, the first encoder includes a plurality of first fully-connected layers, the first feature representation is obtained based on outputs of M first fully-connected layers in the plurality of first fully-connected layers, and M is a positive number greater than 1.

Alternatively, the second encoder includes a plurality of second fully-connected layers, and the second feature representation is obtained based on an output of a second fully-connected layer that is in the plurality of second fully-connected layers and that is closest to an output layer.

In a possible implementation, the attribute information of the target user includes user attributes in a plurality of dimensions. The first feature representation is obtained by processing, by the first encoder, a first target embedding representation corresponding to the attribute information of the target user. Further, a first initial embedding representation corresponding to the attribute information of the user may be obtained. The first initial embedding representation includes a plurality of first embedding vectors, and each first embedding vector corresponds to the user attribute in one dimension. The first initial embedding representation is processed over a weight determining network, to obtain first weights of all the user attributes. The plurality of first embedding vectors are adjusted based on the first weights to obtain the first target embedding representation. The first loss is further used to update the weight determining network.

In a possible implementation, the attribute information of the target user includes at least one of the following: a gender, an age, an occupation, an income, a hobby, and an education level.

In a possible implementation, the attribute information of the target item includes at least one of the following: an item name, a developer, an installation package size, a category, and a positivity rating.

FIG. 8 is a diagram of a structure of a recommendation apparatus 800 according to an embodiment of this application. The apparatus 800 includes:

an obtaining module 801, configured to obtain a first feature representation and a second feature representation, where the first feature representation corresponds to attribute information of a target user, the second feature representation corresponds to attribute information of a target item, the first feature representation includes a plurality of first feature sub-representations, and the second feature representation includes a plurality of second feature sub-representations; and

for a specific description of the obtaining module 801, refer to the description of step 501 in the foregoing embodiment, and this is not described herein again;

a data processing module 802, configured to: determine a plurality of similarities based on the plurality of first feature sub-representations and the plurality of second feature sub-representations, where each similarity is a similarity between one of the first feature sub-representations and one of the second feature sub-representations; and

for a specific description of the data processing module 802, refer to the descriptions of steps 502 and 503 in the foregoing embodiment, and this is not described herein again; and

fuse the plurality of similarities to obtain recommendation information between the target user and the target; and

a recommendation module 803, configured to: when the recommendation information meets a preset condition, determine to recommend the target item to the target user.

For a specific description of the recommendation module 803, refer to the description of step 504 in the foregoing embodiment, and this is not described herein again.

In a possible implementation, the plurality of first feature sub-representations are obtained by segmenting the first feature representation, and the plurality of second feature sub-representations are obtained by segmenting the second feature representation.

In a possible implementation, the plurality of similarities include a plurality of groups of similarities, and similarities in each group are:

similarities between one of the first feature sub-representations and the second feature sub-representations; or
similarities between one of the second feature sub-representations and the first feature sub-representations.

The fusing the plurality of similarities includes:
fusing maximum values of the plurality of similarities included in all the groups of similarities.

In a possible implementation, the first feature representation is obtained by a first encoder based on the attribute information of the target user, the first encoder includes a plurality of first fully-connected layers, the first feature representation is obtained based on outputs of M first fully-connected layers in the plurality of first fully-connected layers, and M is a positive number greater than 1.

In a possible implementation,
the second feature representation is obtained by a second encoder based on the attribute information of the target item, the second encoder includes a plurality of second fully-connected layers, and the second feature representation is obtained based on an output of a second fully-connected layer that is in the plurality of second fully-connected layers and that is closest to an output layer.

In a possible implementation, the attribute information of the target user includes user attributes in a plurality of dimensions. The first feature representation is obtained by processing, by the first encoder, a first target embedding representation corresponding to the attribute information of the target user.

The obtaining module is further configured to obtain a first initial embedding representation corresponding to the attribute information of the user. The first initial embedding representation includes a plurality of first embedding vectors, and each first embedding vector corresponds to a user attribute in one dimension.

The apparatus further includes a weight adjusting module, configured to: process the first initial embedding representation over a weight determining network, to obtain first weights of all the user attributes; and

adjust the plurality of first embedding vectors based on the first weights, to obtain the first target embedding representation.

In a possible implementation, the attribute information of the target item includes item attributes in a plurality of dimensions. The second feature representation is obtained by processing, by the second encoder, a second target embedding representation corresponding to the attribute information of the target item.

The obtaining module is further configured to obtain a second initial embedding representation corresponding to the attribute information of the item. The second initial embedding representation includes a plurality of second embedding vectors, and each second embedding vector corresponds to an item attribute in one dimension.

The apparatus further includes the weight adjusting module, configured to: process the second initial embedding representation over a weight determining network, to obtain second weights of all the item attributes; and

adjust the plurality of second embedding vectors based on the second weights, to obtain the second target embedding representation.

In a possible implementation, the weight determining network includes only one FC layer.

In a possible implementation, the attribute information of the target user includes at least one of the following: a gender, an age, an occupation, an income, a hobby, and an education level.

In a possible implementation, the attribute information of the target item includes at least one of the following: an item name, a developer, an installation package size, a category, and a positivity rating.

FIG. 9 is a diagram of a structure of a data processing apparatus 900 according to an embodiment of this application. The apparatus 900 includes:

an obtaining module 901, configured to obtain a first feature representation and a second feature representation, where the first feature representation is obtained through feature extraction by a first encoder on attribute information of a target user, the second feature representation is obtained through feature extraction by a second encoder on attribute information of a target item, the first feature representation includes a plurality of first feature sub-representations, and the second feature representation includes a plurality of second feature sub-representations; and

for a specific description of the obtaining module 901, refer to the description of step 701 in the foregoing embodiment, and this is not described herein again; and

a data processing module 902, configured to: determine a plurality of similarities based on the plurality of first feature sub-representations and the plurality of second feature sub-representations, where each similarity is a similarity between one of the first feature sub-representations and one of the second feature sub-representations; and fuse the plurality of similarities to obtain recommendation information between the target user and the target, where the recommendation information and a corresponding similarity annotation are used to determine a first loss, the first loss is used to update the first encoder and the second encoder, and the similarity annotation is obtained based on a real operation log of the target user.

For a specific description of the data processing module 902, refer to the descriptions of steps 702 and 703 in the foregoing embodiment, and this is not described herein again.

In a possible implementation, a similarity between the first feature representation and the second feature representation and a corresponding similarity annotation are used to determine a second loss, and the second loss is used to update the first encoder and the second encoder, where the similarity annotation is obtained based on a real operation log of the target user; and when the real operation log indicates that the target user has a positive operation on the target item, the similarity annotation indicates a similarity greater than a threshold; or when the real operation log indicates that the target user has no operation on the target item or has a negative operation on the target item, the similarity annotation indicates a similarity less than the threshold.

In a possible implementation, the plurality of first feature sub-representations are obtained by segmenting the first feature representation, and the plurality of second feature sub-representations are obtained by segmenting the second feature representation.

In a possible implementation, the plurality of similarities include a plurality of groups of similarities, and similarities in each group are:

similarities between one of the first feature sub-representations and the second feature sub-representations; or similarities between one of the second feature sub-representations and the first feature sub-representations.

The fusing the plurality of similarities includes:
fusing maximum values of the plurality of similarities included in all the groups of similarities.

In a possible implementation,

the first encoder includes a plurality of first fully-connected layers, the first feature representation is obtained based on outputs of M first fully-connected layers in the plurality of first fully-connected layers, and M is a positive number greater than 1; or
the second encoder includes a plurality of second fully-connected layers, and the second feature representation is obtained based on an output of a second fully-connected layer that is in the plurality of second fully-connected layers and that is closest to an output layer.

In a possible implementation, the attribute information of the target user includes user attributes in a plurality of dimensions. The first feature representation is obtained by processing, by the first encoder, a first target embedding representation corresponding to the attribute information of the target user.

The obtaining module is further configured to obtain a first initial embedding representation corresponding to the attribute information of the user. The first initial embedding representation includes a plurality of first embedding vectors, and each first embedding vector corresponds to a user attribute in one dimension.

The apparatus further includes a weight adjusting module, configured to: process the first initial embedding representation over a weight determining network, to obtain first weights of all the user attributes; and
adjust the plurality of first embedding vectors based on the first weights, to obtain the first target embedding representation.

The first loss is further used to update the weight determining network.

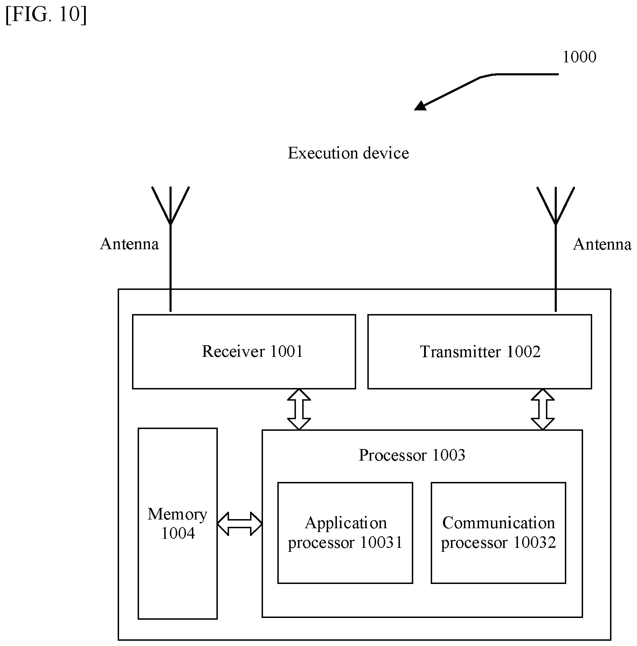

The following describes an execution device provided in embodiments of this application. FIG. 10 is a diagram of a structure of an execution device according to an embodiment of this application. The execution device 1000 may be specifically represented as a mobile phone, a tablet, a notebook computer, an intelligent wearable device, a server, or the like. This is not limited herein. The recommendation apparatus described in the embodiment corresponding to FIG. 8 may be deployed on the execution device 1000, and is configured to implement a function of the recommendation method in the embodiment corresponding to FIG. 10. Specifically, the execution device 1000 includes a receiver 1001, a transmitter 1002, a processor 1003 (there may be one or more processors 1003 in the execution device 1000), and a memory 1004. The processor 1003 may include an application processor 10031 and a communication processor 10032. In some embodiments of this application, the receiver 1001, the transmitter 1002, the processor 1003, and the memory 1004 may be connected through a bus or in another manner.

The memory 1004 may include a read-only memory and a random access memory, and provide instructions and data for the processor 1003. A part of the memory 1004 may further include a non-volatile random access memory (non-volatile random access memory, NVRAM). The memory 1004 stores a processor and operation instructions, an executable module or a data structure, a subnet thereof, or an extended set thereof. The operation instructions may include various operation instructions for various operations.

The processor 1003 controls an operation of the execution device. In specific application, components of the execution device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 1003, or may be implemented by the processor 1003. The processor 1003 may be an integrated circuit chip, and has a signal processing capability. In an implementation process, steps in the method can be implemented by using a hardware integrated logical circuit in the processor 1003, or by using instructions in a form of software. The processor 1003 may be a general-purpose processor, a digital signal processor (digital signal processor, DSP), a microprocessor or microcontroller, and a vision processing unit (vision processing unit, VPU), a tensor processing unit (tensor processing unit, TPU), and another processor suitable for AI computing, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1003 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory 1004. The processor 1003 reads information in the memory 1004, and completes steps 501 to 504 in the foregoing embodiment in combination with hardware of the processor 1003.

The receiver 1001 may be configured to receive input digital or character information, and generate a signal input related to setting and function control of the execution device. The transmitter 1002 may be configured to output the digital or character information through a first interface. The transmitter 1002 may be configured to send instructions to a disk group through the first interface, to modify data in the disk group. The transmitter 1002 may further include a display device like a display.

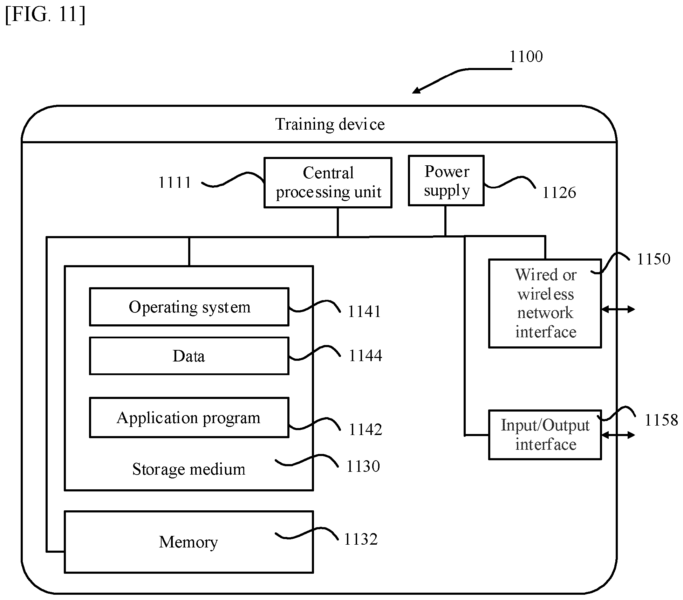

An embodiment of this application further provides a training device. FIG. 11 is a diagram of a structure of a training device according to an embodiment of this application. Specifically, a training device 1100 is implemented by one or more servers. The training device 1100 may vary greatly with configuration or performance, and may include one or more central processing units (central processing units, CPUs) 1111 (for example, one or more processors), a memory 1132, and one or more storage media 1130 (for example, one or more mass storage devices) that store an application program 1142 or data 1144. The memory 1132 and the storage medium 1130 may perform transitory storage or persistent storage. The program stored in the storage medium 1130 may include one or more modules (not shown in the figure), and each module may include a series of instruction operations for the training device. Further, the central processing unit 1111 may be configured to communicate with the storage medium 1130, and perform the series of instruction operations in the storage medium 1130 on the training device 1100.

The training device 1100 may further include one or more power supplies 1126, one or more wired or wireless network interfaces 1150, one or more input/output interfaces 1158, or one or more operating systems 1141, for example, Windows ServerTM, Mac OS XTM, UnixTM, LinuxTM, and FreeBSDTM.

Specifically, the training device may perform steps 701 to 703 in the foregoing embodiment.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program runs on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

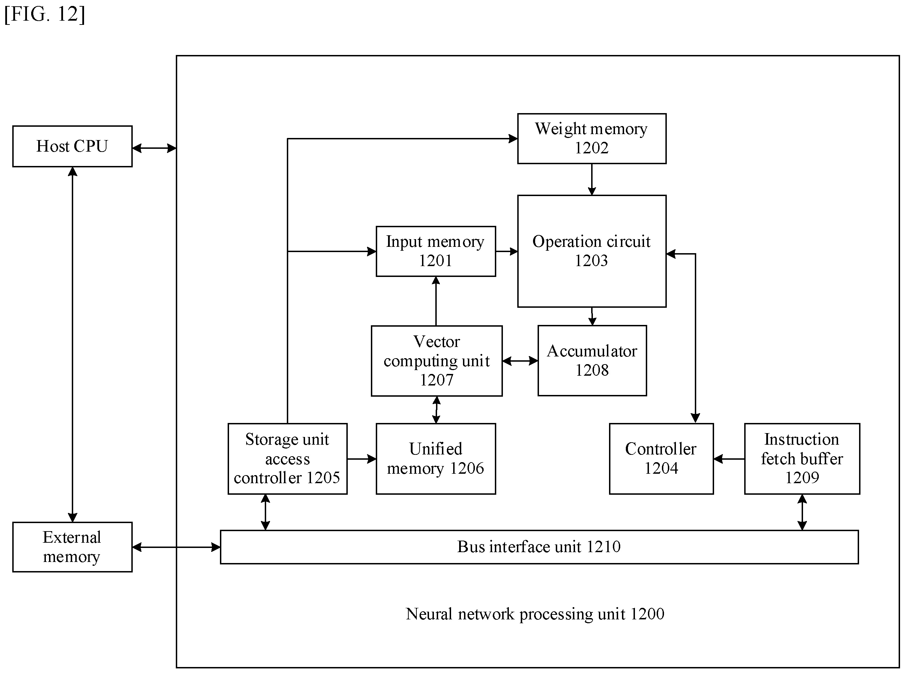

Specifically, FIG. 12 is a diagram of a structure of a chip according to an embodiment of this application. The chip may be represented as a neural network processing unit NPU 1200. The NPU 1200 is mounted to a host CPU (host CPU) as a coprocessor, and the host CPU allocates a task. A core part of the NPU is an operation circuit 1203, and a controller 1204 controls the operation circuit 1203 to extract matrix data in a memory and perform a multiplication operation.

The NPU 1200 may implement, through mutual cooperation between internal components, the information recommendation method provided in the embodiment described in FIG. 5 and the model training method provided in the embodiment described in FIG. 7.

More specifically, in some implementations, the operation circuit 1203 in the NPU 1200 includes a plurality of process engines (Process Engines, PEs). In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general purpose matrix processor.

For example, it is assumed that there is an input matrix A, a weight matrix B, and an output matrix C. The operation circuit fetches, from a weight memory 1202, data corresponding to the matrix B, and caches the data on each PE in the operation circuit. The operation circuit fetches data of the matrix A from an input memory 1201, to perform a matrix operation on the matrix B, and stores an obtained partial result or an obtained final result of the matrix in an accumulator (accumulator) 1208.

A unified memory 1206 is configured to store input data and output data. Weight data is directly transferred to the weight memory 1202 by using a direct memory access controller DMAC (Direct Memory Access Controller, DMAC) 1205. The input data is also transferred to the unified memory 1206 by using the DMAC.

A BIU is a bus interface unit, namely, a bus interface unit 1210, and is configured to perform interaction between an AXI bus, and the DMAC and an instruction fetch buffer (Instruction Fetch Buffer, IFB) 1209.

The bus interface unit (Bus Interface Unit, BIU for short) 1210 is used by the instruction fetch buffer 1209 to obtain instructions from an external memory, and is further used by the direct memory access controller 1205 to obtain original data of the input matrix A or the weight matrix B from the external memory.

The DMAC is mainly configured to transfer input data in the external memory DDR to the unified memory 1206, transfer weight data to the weight memory 1202, or transfer input data to the input memory 1201.

A vector computing unit 1207 includes a plurality of operation processing units. If required, further processing is performed on an output of the operation circuit 1203, for example, vector multiplication, vector addition, an exponential operation, a logarithmic operation, or size comparison. The vector computing unit 1207 is mainly used for non-convolutional/fully-connected layer network computation in a neural network, such as batch normalization (batch normalization), pixel-level summation, and upsampling a feature map.

In some implementations, the vector computing unit 1207 can store a processed output vector in the unified memory 1206. For example, the vector computing unit 1207 may apply a linear function or a nonlinear function to the output of the operation circuit 1203, for example, perform linear interpolation on a feature plane extracted at a convolutional layer. For another example, the linear function or the nonlinear function is applied to a vector of an accumulated value to generate an activation value. In some implementations, the vector computing unit 1207 generates a normalized value, a pixel-level summation value, or both. In some implementations, the processed output vector can be used as an activated input to the operation circuit 1203, for example, the processed output vector can be used at a subsequent layer of the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be completed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A recommendation method, wherein the method comprises:

    obtaining a first feature representation and a second feature representation, wherein the first feature representation corresponds to attribute information of a target user, the second feature representation corresponds to attribute information of a target item, the first feature representation comprises a plurality of first feature sub-representations, and the second feature representation comprises a plurality of second feature sub-representations;
    determining a plurality of similarities based on the plurality of first feature sub-representations and the plurality of second feature sub-representations, wherein each similarity is a similarity between one of the first feature sub-representations and one of the second feature sub-representations;
    fusing the plurality of similarities to obtain recommendation information between the target user and the target; and
    when the recommendation information meets a preset condition, determining to recommend the target item to the target user.

2. The method according to claim 1, wherein the plurality of first feature sub-representations are obtained by segmenting the first feature representation, and the plurality of second feature sub-representations are obtained by segmenting the second feature representation.

3. The method according to claim 1 or 2, wherein the plurality of similarities comprise a plurality of groups of similarities, and similarities in each group are: similarities between one of the first feature sub-representations and the second feature sub-representations; or

similarities between one of the second feature sub-representations and the first feature sub-representations; and the fusing the plurality of similarities comprises:
fusing maximum values of the plurality of similarities comprised in all the groups of similarities.

4. The method according to any one of claims 1 to 3, wherein the first feature representation is obtained by a first encoder based on the attribute information of the target user, the first encoder comprises a plurality of first fully-connected layers, the first feature representation is obtained based on outputs of M first fully-connected layers in the plurality of first fully-connected layers, and M is a positive number greater than 1.

5. The method according to any one of claims 1 to 4, wherein the second feature representation is obtained by a second encoder based on the attribute information of the target item, the second encoder comprises a plurality of second fully-connected layers, and the second feature representation is obtained based on an output of a second fully-connected layer that is in the plurality of second fully-connected layers and that is closest to an output layer.

6. The method according to claim 4 or 5, wherein the attribute information of the target user comprises user attributes in a plurality of dimensions, and the first feature representation is obtained by processing, by the first encoder, a first target embedding representation corresponding to the attribute information of the target user; and the method further comprises:

obtaining a first initial embedding representation corresponding to the attribute information of the user, wherein the first initial embedding representation comprises a plurality of first embedding vectors, and each first embedding vector corresponds to a user attribute in one dimension;
processing the first initial embedding representation over a weight determining network, to obtain first weights of all the user attributes; and
adjusting the plurality of first embedding vectors based on the first weights, to obtain the first target embedding representation.

7. The method according to any one of claims 4 to 6, wherein the attribute information of the target item comprises item attributes in a plurality of dimensions, and the second feature representation is obtained by processing, by the second encoder, a second target embedding representation corresponding to the attribute information of the target item; and the method further comprises:

obtaining a second initial embedding representation corresponding to the attribute information of the item, wherein the second initial embedding representation comprises a plurality of second embedding vectors, and each second embedding vector corresponds to an item attribute in one dimension;
processing the second initial embedding representation over a weight determining network, to obtain second weights of all the item attributes; and
adjusting the plurality of second embedding vectors based on the second weights, to obtain the second target embedding representation.

8. The method according to claim 6 or 7, wherein the weight determining network comprises only one FC layer.

9. The method according to any one of claims 1 to 8, wherein the attribute information of the target user comprises at least one of the following: a gender, an age, an occupation, an income, a hobby, and an education level.

10. The method according to any one of claims 1 to 9, wherein the attribute information of the target item comprises at least one of the following: an item name, a developer, an installation package size, a category, and a positivity rating.

11. A data processing method, wherein the method comprises:

obtaining a first feature representation and a second feature representation, wherein the first feature representation is obtained through feature extraction by a first encoder on attribute information of a target user, the second feature representation is obtained through feature extraction by a second encoder on attribute information of a target item, the first feature representation comprises a plurality of first feature sub-representations, and the second feature representation comprises a plurality of second feature sub-representations;

determining a plurality of similarities based on the plurality of first feature sub-representations and the plurality of second feature sub-representations, wherein each similarity is a similarity between one of the first feature sub-representations and one of the second feature sub-representations; and

fusing the plurality of similarities to obtain recommendation information between the target user and the target, wherein the recommendation information and a corresponding similarity annotation are used to determine a first loss, the first loss is used to update the first encoder and the second encoder, and the similarity annotation is obtained based on a real operation log of the target user.

12. The method according to claim 11, wherein a similarity between the first feature representation and the second feature representation is used to determine a second loss, and the second loss is used to update the first encoder and the second encoder; and when the real operation log indicates that the target user has a positive operation on the target item, the second loss indicates to maximize the similarity between the first feature representation and the second feature representation; or when the real operation log indicates that the target user has no operation on the target item or has a negative operation on the target item, the second loss indicates to minimize the similarity between the first feature representation and the second feature representation.

13. The method according to claim 11 or 12, wherein the plurality of first feature sub-representations are obtained by segmenting the first feature representation, and the plurality of second feature sub-representations are obtained by segmenting the second feature representation.

14. The method according to any one of claims 11 to 13, wherein the plurality of similarities comprise a plurality of groups of similarities, and similarities in each group are:

similarities between one of the first feature sub-representations and the second feature sub-representations; or
similarities between one of the second feature sub-representations and the first feature sub-representations; and
the fusing the plurality of similarities comprises:
fusing maximum values of the plurality of similarities comprised in all the groups of similarities.

15. The method according to any one of claims 11 to 14, wherein

the first encoder comprises a plurality of first fully-connected layers, the first feature representation is obtained based on outputs of M first fully-connected layers in the plurality of first fully-connected layers, and M is a positive number greater than 1; or
the second encoder comprises a plurality of second fully-connected layers, and the second feature representation is obtained based on an output of a second fully-connected layer that is in the plurality of second fully-connected layers and that is closest to an output layer.

16. The method according to any one of claims 11 to 15, wherein the attribute information of the target user comprises user attributes in a plurality of dimensions, and the first feature representation is obtained by processing, by the first encoder, a first target embedding representation corresponding to the attribute information of the target user; and the method further comprises:

obtaining a first initial embedding representation corresponding to the attribute information of the user, wherein the first initial embedding representation comprises a plurality of first embedding vectors, and each first embedding vector corresponds to a user attribute in one dimension;
processing the first initial embedding representation over a weight determining network, to obtain first weights of all the user attributes; and
adjusting the plurality of first embedding vectors based on the first weights, to obtain the first target embedding representation, wherein
the first loss is further used to update the weight determining network.

17. A recommendation apparatus, wherein the apparatus comprises:

an obtaining module, configured to obtain a first feature representation and a second feature representation, wherein the first feature representation corresponds to attribute information of a target user, the second feature representation corresponds to attribute information of a target item, the first feature representation comprises a plurality of first feature sub-representations, and the second feature representation comprises a plurality of second feature sub-representations;

a data processing module, configured to: determine a plurality of similarities based on the plurality of first feature sub-representations and the plurality of second feature sub-representations, wherein each similarity is a similarity between one of the first feature sub-representations and one of the second feature sub-representations; and fuse the plurality of similarities to obtain recommendation information between the target user and the target; and

a recommendation module, configured to: when the recommendation information meets a preset condition, determine to recommend the target item to the target user.

18. The apparatus according to claim 17, wherein the plurality of first feature sub-representations are obtained by segmenting the first feature representation, and the plurality of second feature sub-representations are obtained by segmenting the second feature representation.

19. The apparatus according to claim 17 or 18, wherein the plurality of similarities comprise a plurality of groups of similarities, and similarities in each group are: similarities between one of the first feature sub-representations and the second feature sub-representations; or

similarities between one of the second feature sub-representations and the first feature sub-representations; and the fusing the plurality of similarities comprises:
fusing maximum values of the plurality of similarities comprised in all the groups of similarities.

20. The apparatus according to any one of claims 17 to 19, wherein the first feature representation is obtained by a first encoder based on the attribute information of the target user, the first encoder comprises a plurality of first fully-connected layers, the first feature representation is obtained based on outputs of M first fully-connected layers in the plurality of first fully-connected layers, and M is a positive number greater than 1.

21. The apparatus according to any one of claims 17 to 20, wherein
the second feature representation is obtained by a second encoder based on the attribute information of the target item, the second encoder comprises a plurality of second fully-connected layers, and the second feature representation is obtained based on an output of a second fully-connected layer that is in the plurality of second fully-connected layers and that is closest to an output layer.

22. The apparatus according to claim 20 or 21, wherein the attribute information

of the target user comprises user attributes in a plurality of dimensions, and the first feature representation is obtained by processing, by the first encoder, a first target embedding representation corresponding to the attribute information of the target user;

the obtaining module is further configured to obtain a first initial embedding representation corresponding to the attribute information of the user, wherein the first initial embedding representation comprises a plurality of first embedding vectors, and each first embedding vector corresponds to a user attribute in one dimension; and the apparatus further comprises a weight adjusting module, configured to: process the first initial embedding representation over a weight determining network, to obtain first weights of all the user attributes; and adjust the plurality of first embedding vectors based on the first weights, to obtain the first target embedding representation.

23. The apparatus according to any one of claims 20 to 22, wherein the attribute information of the target item comprises item attributes in a plurality of dimensions, and the second feature representation is obtained by processing, by the second encoder, a second target embedding representation corresponding to the attribute information of the target item;

the obtaining module is further configured to obtain a second initial embedding representation corresponding to the attribute information of the item, wherein the second initial embedding representation comprises a plurality of second embedding vectors, and each second embedding vector corresponds to an item attribute in one dimension; and
the apparatus further comprises the weight adjusting module, configured to:

process the second initial embedding representation over a weight determining network, to obtain second weights of all the item attributes; and

adjust the plurality of second embedding vectors based on the second weights, to obtain the second target embedding representation.

24. The apparatus according to claim 22 or 23, wherein the weight determining network comprises only one FC layer.

25. The apparatus according to any one of claims 17 to 24, wherein the attribute information of the target user comprises at least one of the following: a gender, an age, an occupation, an income, a hobby, and an education level.

26. The apparatus according to any one of claims 17 to 25, wherein the attribute information of the target item comprises at least one of the following: an item name, a developer, an installation package size, a category, and a positivity rating.

27. A data processing apparatus, wherein the apparatus comprises:

an obtaining module, configured to obtain a first feature representation and a second feature representation, wherein the first feature representation is obtained through feature extraction by a first encoder on attribute information of a target user, the second feature representation is obtained through feature extraction by a second encoder on attribute information of a target item, the first feature representation comprises a plurality of first feature sub-representations, and the second feature representation comprises a plurality of second feature sub-representations; and

a data processing module, configured to: determine a plurality of similarities based on the plurality of first feature sub-representations and the plurality of second feature sub-representations, wherein each similarity is a similarity between one of the first feature sub-representations and one of the second feature sub-representations; and fuse the plurality of similarities to obtain recommendation information between the target user and the target, wherein the recommendation information and a corresponding similarity annotation are used to determine a first loss, the first loss is used to update the first encoder and the second encoder, and the similarity annotation is obtained based on a real operation log of the target user.

28. The apparatus according to claim 27, wherein a similarity between the first feature representation and the second feature representation is used to determine a second loss, and the second loss is used to update the first encoder and the second encoder; and when the real operation log indicates that the target user has a positive operation on the target item, the second loss indicates to maximize the similarity between the first feature representation and the second feature representation; or when the real operation log indicates that the target user has no operation on the target item or has a negative operation on the target item, the second loss indicates to minimize the similarity between the first feature representation and the second feature representation.

29. The apparatus according to claim 27 or 28, wherein the plurality of first feature sub-representations are obtained by segmenting the first feature representation, and the plurality of second feature sub-representations are obtained by segmenting the second feature representation.

30. The apparatus according to any one of claims 27 to 29, wherein the plurality of similarities comprise a plurality of groups of similarities, and similarities in each group are:

similarities between one of the first feature sub-representations and the second feature sub-representations; or similarities between one of the second feature sub-representations and the first feature sub-representations; and the fusing the plurality of similarities comprises:
fusing maximum values of the plurality of similarities comprised in all the groups of similarities.

31. The apparatus according to any one of claims 27 to 30, wherein

the first encoder comprises a plurality of first fully-connected layers, the first feature representation is obtained based on outputs of M first fully-connected layers in the plurality of first fully-connected layers, and M is a positive number greater than 1; or
the second encoder comprises a plurality of second fully-connected layers, and the second feature representation is obtained based on an output of a second fully-connected layer that is in the plurality of second fully-connected layers and that is closest to an output layer.

32. The apparatus according to any one of claims 27 to 31, wherein the attribute information of the target user comprises user attributes in a plurality of dimensions, and the first feature representation is obtained by processing, by the first encoder, a first target embedding representation corresponding to the attribute information of the target user;

the obtaining module is further configured to obtain a first initial embedding representation corresponding to the attribute information of the user, wherein the first initial embedding representation comprises a plurality of first embedding vectors, and each first embedding vector corresponds to a user attribute in one dimension; and the apparatus further comprises a weight adjusting module, configured to:

process the first initial embedding representation over a weight determining network, to obtain first weights of all the user attributes; and
adjust the plurality of first embedding vectors based on the first weights, to obtain the first target embedding representation, wherein
the first loss is further used to update the weight determining network.

33. A computing device, wherein the computing device comprises a memory and a processor, the memory stores code, and the processor is configured to: obtain the code, and perform the method according to any one of claims 1 to 16.

34. A computer storage medium, wherein the computer storage medium stores one or more instructions, and when the instructions are executed by one or more computers, the one or more computers are enabled to implement the method according to any one of claims 1 to 16.

35. A computer program product, comprising code, wherein when the code is executed, the method according to any one of claims 1 to 16 is implemented.

[FIG. 1]

EP 4 567 632 A1

[FIG. 2]

200

Data collection device 260

Data flow

Database 230

Data flow

Training device 220

Execution device 210

Calculation module 211

Recommendation model 201

I/O interface 212

Input data

Output a result

Client device 240

Data storage system 250

[FIG. 3]

[FIG. 4]

Offline training module → Recommendation model → Online prediction module

A user provides feedback on a displayed item

Select and rank an item to be displayed

**EP 4 567 632 A1**

[FIG. 5]

Obtain a first feature representation and a second feature representation, where the first feature representation corresponds to attribute information of a target user, the second feature representation corresponds to attribute information of a target item, the first feature representation includes a plurality of first feature sub-representations, and the second feature representation includes a plurality of second feature sub-representations — 501

Determine a plurality of similarities based on the plurality of first feature sub-representations and the plurality of second feature sub-representations, where each similarity is a similarity between one of the first feature sub-representations and one of the second feature sub-representations — 502

Fuse the plurality of similarities to obtain recommendation information between the target user and the target — 503

When the recommendation information meets a preset condition, determine to recommend the target item to the target user — 504

36

[FIG. 6]

EP 4 567 632 A1

[FIG. 7]

Obtain a first feature representation and a second feature representation, where the first feature representation corresponds to attribute information of a target user, the second feature representation corresponds to attribute information of a target item, the first feature representation includes a plurality of first feature sub-representations, and the second feature representation includes a plurality of second feature sub-representations 701

Determine a plurality of similarities based on the plurality of first feature sub-representations and the plurality of second feature sub-representations, where each similarity is a similarity between one of the first feature sub-representations and one of the second feature sub-representations 702

Fuse the plurality of similarities to obtain recommendation information between the target user and the target, where the recommendation information and a corresponding similarity annotation are used to determine a first loss, the first loss is used to update a first encoder and a second encoder, and the similarity annotation is obtained based on a real operation log of the target user 703

[FIG. 8]

800

Obtaining module 801

Data processing module 802

Recommendation module 803

[FIG. 9]

900

Obtaining module 901

Data processing module 902

[FIG. 10]

1000

Execution device

Antenna

Antenna

| Receiver 1001 | Transmitter 1002 |
|---|---|

Processor 1003

| Memory 1004 | Application processor 10031 | Communication processor 10032 |
|---|---|---|

[FIG. 11]

1100

Training device

1111 Central processing unit

Power supply 1126

Operating system 1141

Data 1144

Application program 1142

Storage medium 1130

Memory 1132

Wired or wireless network interface 1150

Input/Output interface 1158

[FIG. 12]

EP 4 567 632 A1

Neural network processing unit 1200

[FIG. 13]

## INTERNATIONAL SEARCH REPORT

| International application No. |
| --- |
| **PCT/CN2023/114023** |

**A.    CLASSIFICATION OF SUBJECT MATTER**

G06F 16/9535(2019.01)i

According to International Patent Classification (IPC) or to both national classification and IPC

**B.    FIELDS SEARCHED**

Minimum documentation searched (classification system followed by classification symbols)

IPC：G06F G06Q

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, ENTXT, CNKI, IEEE: 编码, 属性, 双塔, 损失, 特征, 推荐, 物品, 相关, 相似, 信息, 用户, 自监督, google, learning, loss, self-supervised, recommendation+, correlated feature mask+

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116049536 A (HUAWEI TECHNOLOGIES CO., LTD.) 02 May 2023 (2023-05-02)<br>claims 1-35 | 1-35 |
| X | CN 112765477 A (BEIJING BAIDU NETCOM SCIENCE AND TECHNOLOGY CO., LTD.) 07 May 2021 (2021-05-07)<br>description, paragraphs 44-141 | 1-35 |
| A | CN 113269612 A (TSINGHUA UNIVERSITY et al.) 17 August 2021 (2021-08-17)<br>entire document | 1-35 |
| A | CN 111428091 A (TENCENT TECHNOLOGY (SHENZHEN) CO., LTD.) 17 July 2020 (2020-07-17)<br>entire document | 1-35 |
| A | US 2017344572 A1 (GOOGLE INC.) 30 November 2017 (2017-11-30)<br>entire document | 1-35 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 November 2023** | **22 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/114023**

| Patent document cited in search report | | | Publication date (day/month/year) | Patent family member(s) | | | Publication date (day/month/year) |
|---|---|---|---|---|---|---|---|
| CN | 116049536 | A | 02 May 2023 | None | | | |
| CN | 112765477 | A | 07 May 2021 | KR | 20210124109 | A | 14 October 2021 |
| | | | | EP | 3940555 | A2 | 19 January 2022 |
| | | | | JP | 2022020070 | A | 31 January 2022 |
| | | | | US | 2022058222 | A1 | 24 February 2022 |
| | | | | EP | 3940555 | A3 | 25 May 2022 |
| CN | 113269612 | A | 17 August 2021 | None | | | |
| CN | 111428091 | A | 17 July 2020 | HK | 40025843 | A0 | 31 December 2020 |
| | | | | HK | 40025843 | A1 | 23 April 2021 |
| US | 2017344572 | A1 | 30 November 2017 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211032748